# EUROPÄISCHE PATENTSCHRIFT

(11) **EP 3 054 810 B1**
(45) Veröffentlichungstag und Bekanntmachung des Hinweises auf die Patenterteilung: **21.03.2018**
(21) Anmeldenummer: 14783818.9
(22) Anmeldetag: 10.10.2014
(51) Int. Cl.: A47B 47/02, F16B 7/18, F16B 12/40

(54) **VERBINDUNGSKNOTENANORDNUNG UND BAUSATZ**
CONNECTING-JUNCTION ARRANGEMENT AND ASSEMBLY KIT
SYSTÈME DE NOEUDS D'ASSEMBLAGE ET KIT D'ASSEMBLAGE

(30) Priorität: 11.10.2013 DE 102013220612
(43) Veröffentlichungstag der Anmeldung: 17.08.2016
(73) Patentinhaber: System 180 Stahlrohrentwicklungs- und Vertriebsgesellschaft mbH, 12489 Berlin (DE)
(72) Erfinder: UPTMOOR, Dirk, 10318 Berlin (DE); COCCIA, Francesco, 10437 Berlin (DE); STADLER, Andreas, 12045 Berlin (DE); RABUSKE, Valeria, 10318 Berlin (DE); BRUMMACK, Katharina, 12355 Berlin (DE)
(74) Vertreter: Patentanwälte Bressel und Partner mbB
(86) Internationale Anmeldenummer: PCT/EP2014/071736
(87) Internationale Veröffentlichungsnummer: WO 2015/052311

(56) Entgegenhaltungen:
- DD-A1- 100 316
- DE-A1-102009 011 089
- FR-A- 846 974
- FR-A- 1 331 613
- GB-A- 897 899

## Beschreibung

Die Erfindung betrifft eine Verbindungsknotenanordnung für ein mindestens zweidimensionales Tragwerk, insbesondere eine Möbelverbindungsknotenanordnung, mit der gleichartige Tragelemente, beispielsweise Rohre, welche an mindestens einem Ende, vorzugsweise an beiden Enden, abgeplattet sind, miteinander verbunden werden können. Die Erfindung betrifft ferner ein Tragwerk, welches mehrere Verbindungsknotenanordnungen umfasst sowie einen Bausatz zum Ausbilden eines solchen mindestens zweidimensionalen Tragwerks.

Verbindungsknotenanordnungen werden im Stand der Technik verwendet, um aus Stäben oder Stangen, welche vorzugsweise als Rohre ausgebildet sind, zwei- oder dreidimensionale Tragwerke herzustellen. Diese Tragwerke können beispielsweise für modulare Möbelsysteme verwendet werden, mit denen beispielsweise Regalsysteme herstellbar sind. Solche Regalsysteme können sowohl offene Regalabschnitte aber auch geschlossene Regalabschnitte mit Türen oder Fächern etc. aufweisen.

Ein beispielhaftes Bausystem, welches für den Innen-, Messe- und Möbelbau vorgesehen ist, ist in der DE 3902342 A1 beschrieben. Das dort beschriebene räumliche Bausystem aus Stahlrohren, die mit Schrauben ohne zusätzliche Verbinder an ihren Enden verbunden werden, besteht aus in den Hauptachsen x und y eines kartesischen Koordinatensystems verlaufenden Rohren eines ersten Typs, die an den Enden gerade abgeplattet und zur Aufnahme einer Schraube gelocht sind, und aus in z-Richtung verlaufenden Rohren eines anderen Typs, in deren Stirnseiten die Schrauben eingepresst sind und in Diagonalrichtung verlaufenden Rohren eines dritten Typs, die an den Enden im Winkel abgebogen, abgeplattet und zur Aufnahme der Schraube gelocht sind. Bei einem solchen System werden die Rohre des ersten und des dritten Typs in einer Verbindungsknotenanordnung so miteinander verbunden, dass die einzelnen abgeplatteten Enden in unterschiedlichen Ebenen übereinander angeordnet sind. Beim Ausbilden eines zweidimensionalen Tragwerks, bei dem nur die Stahlrohre des ersten Typs an ihren gelochten, abgeplatteten Enden miteinander verbunden werden, sind die einzelnen Rohre somit nicht alle in derselben Ebene angeordnet. Aus diesen Exzentrizitäten entstehen in den Verbindungsknoten Momente, die mögliche Schwachstellen in der Konstruktion darstellen und daher beim Bau von Tragwerken statischer Nachweise bedürfen. Darüber hinaus sind strikte Aufbaurichtlinien einzuhalten, sodass die verschiedenen Rohre möglichst in parallelen Ebenen in dem Tragwerk verbaut sind.

Ein anderes Tragwerk aus Rohren ist beispielsweise in der US 2,964,147 beschrieben.

Auch in der DE 10 2009 011 089 A1 ist eine Verbindungsknotenanordnung für ein wenigstens zweidimensionales Tragwerk, insbesondere eine Möbelstück-Verbindungsknotenanordnung, gezeigt, welche ein oberes Fixierelement und ein unteres Fixierelement, die jeweils flächig ausgeführt oder einander gegenüberliegend angeordnet sind, ein erstes Stangenelement und ein zweites Stangenelement, die jeweils einen abgeplatteten Endabschnitt aufweisen, welcher wenigstens abschnittsweise zwischen dem oberen und dem unteren Fixierelement geklemmt ist, umfasst, wobei an dem oberen und/oder dem unteren Fixierelement innenseitig Positionier- und Fixierkonturen ausgebildet sind, die Auflagekonturen des abgeplatteten Endabschnitts zugeordnet sind, und wobei in dem abgeplatteten Endabschnitt jeweils ein Durchbruch gebildet ist, durch den ein das obere und das untere Fixierelement zum Ausbilden einer auf die abgeplatteten Endabschnitte wirkenden Klemmspannung verbindendes Verbindungselement geführt ist. Bei dieser Anordnung können die einzelnen Endabschnitte, welche in der Verbindungsknotenanordnung miteinander verbunden werden, in einer Ebene angeordnet sein. Dennoch sind die einzelnen Endabschnitte jeweils über ein individuelles Verbindungselement in der Verbindungsknotenanordnung zu fixieren. Dieses macht einen Zusammenbau des Tragwerks schwierig und aufwändig.

Aus der FR 846 974 A ist eine Anschlussvorrichtung zur Verbindung von Stäben eines Gitterwerkes an einer Knotenstelle bekannt, welche miteinander verbundene Schuhstücke aufweist, die jeweils zur Aufnahme des Endes eines der miteinander zu vereinigenden Gitterwerkstäbe bestimmt sind.

Aus der DD 100 316 A1 ist eine Verbindung von flächigen und stabförmigen Bauelementen bekannt, insbesondere aus gleichen oder unterschiedlich dicken Stahlblechen oder anderen plastisch verformbaren Werkstoffen, vorzugsweise für den Metallleichtbau.

Aus der GB 897 899 A ist ein Gitterwerk bekannt, welches eine Vielzahl von Einheitsgittern aufweist, welche im Wesentlichen die Form von Rhomben und je vier gleiche individuelle Stäbe aufweisen, dessen Enden lösbar und fest miteinander verbunden werden können.

Aus der FR 1 331 613 A ist ein Kniegelenk bekannt, welches zwei mittels eines Gelenks verbundene Platten aufweist, wobei jede der Platten an ihren Enden mindestens eine Aussparung in Form eines Kreisbogens und in der Mitte des Kreisbogens ein Loch für eine Fixierschraube aufweist.

Der Erfindung liegt die technische Aufgabe zugrunde, eine verbesserte Verbindungsknotenanordnung, ein verbessertes mindestens zweidimensionales Tragwerk sowie einen Bausatz zu schaffen, die die Nachteile des Standes der Technik beseitigen. Insbesondere einen einfachen Zusammenbau ermöglichen und dennoch eine hohe mechanische Stabilität des Tragwerks gewährleisten.

Die Aufgabe wird erfindungsgemäß durch eine Verbindungsknotenanordnung mit dem Merkmal des Patentanspruchs 1, ein Tragwerk mit den Merkmalen des Patentanspruchs 11 sowie einen Bausatz mit den Merkmalen des Patentanspruchs 14 gelöst. Vorteilhafte Ausgestaltungen der Erfindung ergeben sich aus den Unteransprüchen.

Der Erfindung liegt der Gedanke zugrunde, bei einer ersten Alternative in die abgeplatteten Endabschnitte mindestens eine Vertiefung einzubringen und korrespondierend hierzu in ein oberes und/oder ein unteres Fixierelement mindestens einen Vorsprung für jedes Tragelement vorzusehen, welches in der Verbindungsknotenanordnung verbunden wird. Die in die Vertiefungen der einzelnen Endabschnitte der verschiedenen ersten Tragelemente eingreifenden Vorsprünge führen neben einer kraftschlüssigen Verbindung zusätzlich zu einer formschlüssigen Verbindung zwischen den Fixierelementen und den einzelnen Endabschnitten der ersten Tragelemente. Gemäß einer zweiten Alternative weist jeder abgeplattete Endabschnitt an einer Unterseite oder einer Oberseite mindestens einen Vorsprung in dem Klemmabschnitt auf und weisen das obere Fixierelement oder das untere Fixierelement für jeden Endabschnitt, der zwischen den Fixierelementen gepresst wird, eine Vertiefung auf, in die der entsprechende mindestens eine Vorsprung eines der Endabschnitte im fixierten Zustand eingreift. Auch bei dieser Alternative wird der Form- und Kraftschluss in der Verbindungsknotenanordnung erreicht. Ebenso können beide Alternativen zugleich realisiert sein.

Insbesondere wird eine Verbindungsknotenanordnung für ein mindestens zweidimensionales Tragwerk, insbesondere eine Möbel-Verbindungsknotenanordnung, geschaffen, umfassend gleichartige erste Tragelemente, welche an mindestens einem Ende einen abgeplatteten Endabschnitt aufweisen, ein oberes Fixierelement und ein unteres Fixierelement, ein Verbindungselement zum Ausbilden einer Fixierkraft, welche das obere Fixierelement und das untere Fixierelement in einem fixierten Zustand aufgrund der durch das Verbindungselement ausgeübten Fixierkraft gegeneinander presst, wobei die abgeplatteten Endabschnitte der gleichartigen Tragelemente in einer Ebene angeordnet sind und jeweils mit einem Klemmabschnitt zwischen dem oberen Fixierelement und dem unteren Fixierelement angeordnet sind, wobei entweder nach einer ersten Alternative jeder abgeplattete Endabschnitt an einer Unterseite mindestens eine Vertiefung in dem Klemmabschnitt oder jeder abgeplattete Endabschnitt an einer Oberseite mindestens eine Vertiefung in dem Klemmabschnitt aufweist und das obere Fixierelement oder das untere Fixierelement für jeden Endabschnitt, der zwischen den Fixierelementen gepresst wird, einen Vorsprung aufweist, der in die entsprechende mindestens eine Vertiefung im fixierten Zustand eingreift,
oder nach einer weiteren Alternative jeder abgeplattete Endabschnitt an einer Unterseite mindestens einen Vorsprung in dem Klemmabschnitt oder jeder abgeplattete Endabschnitt an einer Oberseite mindestens einen Vorsprung in dem Klemmabschnitt aufweist und das obere Fixierelement oder das untere Fixierelement für jeden Endabschnitt, der zwischen den Fixierelementen gepresst wird, eine Vertiefung aufweist, in die der entsprechende mindestens eine Vorsprung im fixierten Zustand eingreift,
oder beide Alternativen zugleich ausgebildet sind.

Um eine besonders einfache Montage und/oder auch ein Austauschen einzelner erster Tragelemente aus einer Verbindungsknotenanordnung zu ermöglichen, ist bei einer erfindungsgemäßen Ausführungsform vorgesehen, dass das Verbindungselement in dem fixierten Zustand, in dem die zur Fixierung notwendige Fixierkraft ausgeübt wird, und in einem teilfixierten Zustand anordenbar ist, in dem zwar das obere und das untere Fixierelement miteinander verbunden sind, jedoch nicht die zur Fixierung notwendige Fixierkraft auf diese Fixierelemente seitens des Verbindungselements ausgeübt wird. Bei einer solchen erfindungsgemäßen Ausführungsform können ein oder zwei Federelemente vorgesehen sein, die in dem teilfixierten Zustand die Fixierelemente gegeneinander pressen. Dies bedeutet, dass eine oder die mehreren Federelemente im teilfixierten Zustand zumindest leicht vorgespannt sind.

Es wird ein Tragwerk aus gleichartigen ersten langgestreckten Tragelementen mit an gegenüberliegenden Enden abgeplatteten Endabschnitten vorgeschlagen, die in einer Verbindungsknotenanordnung der eben genannten Art miteinander verbunden sind.

Darüber hinaus wird ein Bausatz für ein mindestens zweidimensionales Tragwerk, insbesondere ein Möbeltragwerk für ein modulares Möbelsystem, geschaffen, welches umfasst: Fixierelemente; gleichartige erste Tragelemente, welche an gegenüberliegenden Enden einen abgeplatteten Endabschnitt aufweisen, wobei die abgeplatteten Endabschnitte der gleichartigen Tragelemente so ausgebildet sind, dass jeweils mehrere Endabschnitte verschiedener der gleichartigen ersten Tragelemente in einer Ebene jeweils mit einem Klemmabschnitt zwischen zwei der Fixierelemente, d.h. zwischen einem oberen Fixierelement und einem unteren Fixierelement, in einer Verbindungsknotenanordnung anordenbar sind, und Verbindungselemente zum Ausbilden einer Fixierkraft, welche die Fixierelemente in einem fixierten Zustand in einer Verbindungsknotenanordnung aufgrund der durch das Verbindungselement ausgeübten Fixierkraft gegeneinander pressen, wobei
entweder nach einer ersten Alternative jeder abgeplattete Endabschnitt an einer Unterseite mindestens eine Vertiefung in dem Klemmabschnitt oder jeder abgeplattete Endabschnitt an einer Oberseite mindestens eine Vertiefung in dem Klemmabschnitt aufweist und das obere Fixierelement oder das untere Fixierelement für jeden Endabschnitt, der zwischen den Fixierelementen gepresst wird, einen Vorsprung aufweist, der in die entsprechende mindestens eine Vertiefung im fixierten Zustand eingreift,
oder nach einer weiteren Alternative jeder abgeplattete Endabschnitt an einer Unterseite mindestens einen Vorsprung in dem Klemmabschnitt oder jeder abgeplattete Endabschnitt an einer Oberseite mindestens einen Vorsprung in dem Klemmabschnitt aufweist und das obere Fixierelement oder das untere Fixierelement für jeden Endabschnitt, der zwischen den Fixierelementen gepresst wird, eine Vertiefung aufweist, in die der entsprechende mindestens eine Vorsprung im fixierten Zustand eingreift,
oder beide Alternativen zugleich ausgebildet sind.

Der Bausatz weist erfindungsgemäß Federelemente auf, welche jeweils zwischen einem Verbindungselement und einem Fixierelement in einer Verbindungsknotenanordnung anordenbar sind, sodass ein oder zwei der Federelemente in einem teilfixierten Zustand des Verbindungselements einer Verbindungsknotenanordnung, in dem das Verbindungselement zwar die Fixierelemente der Verbindungsknotenanordnung miteinander verbindet, aber nicht die zur Fixierung der Endabschnitte zwischen den Fixierelementen im fixierten Zustand notwendige Fixierkraft ausübt, die Fixierelemente gegeneinander pressen.

Die vorgeschlagenen Lösungen zeichnen sich dadurch aus, dass die ersten Tragelemente, welches vorzugsweise langgestreckte Rohre, insbesondere Edelstahlrohre sind, die ein zweidimensionales Tragwerk bilden, alle in derselben Ebene verbaut werden. Dies bedeutet, dass die jeweiligen Endabschnitte, die zwischen den Fixierelementen fixiert werden, in einer Ebene angeordnet sind. Die Endabschnitte der verschiedenen in einem der Verbindungsknotenanordnung miteinander verbundenen Endabschnitte überlappen sich somit nicht. Die in den Endabschnitten ausgebildeten Vertiefungen und die hiermit korrespondierenden Vorsprünge oder/und in den Endabschnitten ausgebildeten Vorsprünge und die hiermit korrespondierenden Vertiefungen der Fixierelemente sorgen im fixierten Zustand der Fixierelemente, in dem Endabschnitte mit Klemmabschnitten zwischen den Fixierelementen geklemmt und somit fixiert sind, zusätzlich zu einer kraftschlüssigen Verbindung auch für eine formschlüssige Verbindung. Hierdurch wird eine höhere Stabilität des Tragwerks erreicht.

Bei einer besonders bevorzugten Ausführungsform ist zumindest das obere Fixierelement eine flache Scheibe mit einer zentralen Durchgangsöffnung, wobei die Scheibe bezüglich eines Punktes in der Durchgangsöffnung punktsymmetrisch angeordnete Vertiefungen und/oder punktsymmetrisch zu diesem Punkt angeordnet die Vorsprünge aufweist.

Um eine Einleitung von Drehmomenten bezüglich einer durch die zentrale Durchgangsöffnung verlaufenden Achse von einem ersten Tragelement in den Verbindungsknoten und/oder andere erste oder zweite Tragelemente zu ermöglichen oder zu verbessern, ist bei einer Ausführungsform vorgesehen, dass die bezüglich eines Punktes in der zentralen Durchgangsöffnung des oberen Fixierelements punktsymmetrisch angeordneten Vertiefungen und/oder punktsymmetrisch zu diesem Punkt angeordneten Vorsprünge keine rotationssymmetrische Anordnung bezüglich einer Drehachse durch den Punkt ausbilden. Als rotationssymmetrisch zu einer Drehachse wird eine Anordnung oder ein Objekt bezeichnet, dessen geometrische Gestalt durch jede beliebige Drehung um die Drehachse in sich überführt wird. Eine beliebige Drehung bedeutet hierbei, eine Drehung um einen beliebigen Drehwinkel um die Drehachse. Denn nur wenn keine Rotationssymmetrie für die Anordnung der Vorsprünge und/oder Vertiefungen in dem oberen Fixierelement bezüglich einer Achse durch einen Punkt in der zentralen Durchgangsöffnung existiert, wird in dem verbundenen Zustand des Verbindungsknotens eine formschlüssige Verbindung zwischen den Vorsprüngen und/oder Vertiefungen des oberen Fixierelements und entsprechenden Vorsprüngen und/oder Vertiefungen des oder der Endabschnitte der ersten Tragelemente bezüglich einer Drehung um eine Achse durch die zentrale Durchgangsöffnung ausgebildet.

Dasselbe gilt entsprechend für die Vorsprünge und Vertiefungen in dem unteren Fixierelement. Auch hier sind die darin gebildeten Vorsprünge und/oder Vertiefungen vorzugsweise punktsymmetrisch zu einem Punkt in einer Öffnung, jedoch nicht rotationssymmetrisch zu irgendeiner Achse durch den Punkt ausgebildet und angeordnet.

Das untere Fixierelement kann bei einer Ausführungsform durch eine Stirnseite eines zweiten langgestreckten Tragelements gebildet sein, die quer zur Längserstreckungsrichtung des zweiten Tragelements orientiert ist. Hierbei bildet die Stirnseite eine Klemmfläche, gegen welche die Klemmabschnitte der Endabschnitte der ersten Tragelemente im fixierten Zustand gepresst werden. Eine solche Ausführungsform führt dann zu einem dreidimensionalen Tragwerk. Die Vorsprünge für ein Eingreifen in Vertiefungen in der Unterseite der Endabschnitte können in der Stirnseite eines solchen zweiten Tragelements ausgebildet sein, welches beispielsweise ein Stab oder Rohr sein kann. Alternativ ist es jedoch möglich, dass die Vorsprünge durch das obere Fixierelement bereitgestellt werden, dies ist insbesondere dann vorteilhaft, wenn das zweite Tragelement ein dünnwandiges Rohr ist und somit keine massive Stirnfläche aufweist. Alternativ können in der Stirnseite Vertiefungen für die Aufnahme von Vorsprüngen ausgebildet sein.

Ebenso sind Ausführungsformen möglich, bei denen das untere Fixierelement über ein Element ausgebildet ist, das nicht lösbar an dem Rest des zweiten Tragelements befestigt ist oder nicht lösbar mit dem Rest des zweiten Tragelements verbunden ist. Vorzugsweise kann die Stirnseite, und somit das untere Fixierelement, in einem solchen Fall über ein stoffschlüssig mit dem Rest des zweiten Tragelements verbundenes Element ausgebildet sein, welches vorzugsweise ansonsten gleichartig oder ähnlich zu dem oberen Fixierelement ausgebildet ist.

Bei einer anderen Ausführungsform ist vorgesehen, dass das untere Fixierelement gleichartig wie das obere Fixierelement als Scheibe mit einer zentralen Durchgangsöffnung ausgebildet ist.

Vorzugsweise sind die Vorsprünge oder/und Vertiefungen in den scheibenartig ausgebildeten Fixierelementen über Materialverformungen ausgebildet, die jeweils eine Einwölbung auf der einen Fläche der Scheibe und eine Vorwölbung als Vorsprung auf der diametral gegenüberliegenden Fläche der Scheibe ausbilden. Dieses bedeutet, dass in einer durch eine laterale Ausdehnung der Scheibe definierten Ebene an derselben Position beispielsweise auf der Oberseite ein Vorsprung und entsprechend auf der Unterseite eine Vertiefung ausgebildet sind. Ebenso können die Vertiefung auf der Oberseite und der Vorsprung auf der Unterseite ausgebildet sein. Die Vorsprünge und Vertiefungen in den Fixierelementen können somit auf einfache Weise über Kaltverformung in die scheibenartigen Fixierelemente eingeprägt werden. Im gleichen Arbeitsgang oder einem zusätzlichen Arbeitsgang kann die Durchgangsöffnung, welche vorzugsweise mittig in den Fixierelementen ausgebildet ist, ausgebildet werden. Vorteil einer solchen Ausführungsform ist, dass eine Anzahl der in einem Bausatz benötigten Elemente klein gehalten wird, da das obere und das untere Fixierelement identisch ausgebildet sind.

In der beschriebenen Weise ausgebildete scheibenartige Fixierelemente können als oberes Fixierelement auch mit einem unteren Fixierelement verwendet werden, welches beispielsweise in einer Stirnseite eines zweiten Tragelements ausgebildet ist und/oder mit diesem, vorzugsweise stoffschlüssig, verbunden ist.

Bei einer bevorzugten Ausführungsform sind die Vertiefungen in den Unterseiten der Endabschnitte über Materialverformungen derart ausgebildet, dass an der Unterseite eine Einwölbung und an der Oberseite Vorwölbung auftritt oder/und die Vertiefungen an der Oberseite der Endabschnitte entsprechen oder über Materialverformung derart ausgebildet sind, dass an der Oberseite eine Einwölbung und an der Unterseite entsprechend eine Vorwölbung auftritt. Bei so ausgebildeten Vertiefungen, die zugleich auf einer gegenüberliegenden Fläche der Endabschnitte zu einer Vorwölbung führen, welche einen Vorsprung darstellen, wird bei geeignet ausgebildeten Fixierelementen, bei denen die Vorsprünge ebenfalls über identische Materialverformungen ausgebildet sind, erreicht, dass die auf den Endabschnitten gebildeten Vorwölbungen als Vorsprünge in Vertiefungen des anliegenden Fixierelements eingreifen. Hierdurch wird ein doppelter Formschluss im fixierten Zustand zwischen Fixierelementen und Endabschnitten erreicht. Stellt beispielsweise das untere Fixierelement Vorsprünge für jeden in der Verbindungsknotenanordnung zu befestigenden Endabschnitt bereit, und sind in den Endabschnitten der ersten Tragelemente somit in der Unterseite Vertiefungen eingebracht, die mit entsprechenden Vorwölbungen auf einer Oberseite der Endabschnitte korrespondieren, so greifen diese Vorwölbungen als Vorsprünge in Vertiefungen des oberen Fixierelements ein. So ausgestaltete Materialverformungen können gleichwirkend zum Ausbilden des mindestens einen Vorsprungs eines Endabschnitts genutzt werden.

Bei einer Ausführungsform ist vorgesehen, dass die mindestens eine Vertiefung in dem Endabschnitt der ersten Tragelemente über ein Durchgangsloch oder Sackloch ausgebildet ist. Diese sind umlaufend durch eine geschlossene Kante begrenzt, so dass ein Formschuss durch einen eingreifenden Vorsprung in alle radialen Richtungen bezogen auf einen Mittelpunkt des Lochs möglich ist.

Analog können auch die Vertiefungen in den Fixierelementen ausgebildet sein.

Ferner muss ein Vorsprung auf einem Endabschnitt nicht mit einer Vertiefung auf der gegenüberliegenden Seite des Endabschnitts oder ein Vorsprung auf einem Fixierelement nicht mit einer Vertiefung auf der gegenüberliegenden Seite des Fixierelements korrespondieren.

Bei einer Ausführungsform ist sowohl an einer Oberseite des Endabschnitts als auch an einer Unterseite des Endabschnitts jeweils mindestens ein Vorsprung ausgebildet. Diese Vorsprünge greifen dann in entsprechende Vertiefungen der Fixierelemente. Beispielsweise sind bei einer Ausführungsform die Vorsprünge bezogen auf eine Fläche des Endabschnitts an derselben Position einander gegenüberliegend an der Unterseite und der Oberseite des Endabschnitts ausgebildet. Diese Vorsprünge können beispielsweise über einen Materialaufbau mittels eines Metallfügeverfahrens auf den Endabschnitten ausgebildet werden. Beispielsweise kann das Material der Vorsprünge über ein Schweißverfahren auf die Oberseite und die Unterseite des Endabschnitts aufgebracht werden. Der mindestens eine Vorsprung an der Oberseite und mindestens eine weitere Vorsprung an der Unterseite müssen jedoch nicht an derselben Position bezogen auf die flächige Ausdehnung des Endabschnitts ausgebildet sein. Diese Ausführungsformen mit mindestens einem Vorsprung auf der Oberseite und mindestens einem Vorsprung auf der Unterseite des Endabschnitts bieten einen besonders guten Formschluss im fixierten Zustand der Verbindungsknotenanordnung.

Das Verbindungselement, welches zum Ausbilden der Fixierkraft vorgesehen ist, ist bei einer bevorzugten Ausführungsform durch die Durchgangsöffnung des oberen Fixierelements hindurch an einem zweiten Tragelement lösbar befestigt, um in dem fixierten Zustand das obere Fixierelement gegen das untere Fixierelement zu pressen. Das zweite Tragelement ist ein anderer Typ von Tragelement als die ersten Tragelemente.

Vorzugsweise ist das Verbindungselement, sofern ein zweites Fixierelement nicht in dem zweiten Tragelement selbst ausgebildet ist, ebenfalls durch eine zentrale Durchgangsöffnung des unteren Fixierelements geführt.

Um eine Festigkeit der Verbindungsknotenanordnung zu steigern und um auf die einzelnen Tragelemente wirkende Drehmomente bezogen auf eine Achse des Verbindungselements, welche senkrecht zu den Fixierelementen verläuft, in der Verbindungsknotenanordnung gut aufnehmen zu können, ist bei einer Ausführungsform vorgesehen, dass bei n gleichartigen ersten Tragelementen, die in der Verbindungsknotenanordnung miteinander zu dem Tragwerk verbindbar sind, wobei n eine natürliche Zahl ≥ 2 ist, die Endabschnitte eines jeden ersten Tragelements zu einer Längsachse des ersten Tragelements, d. h. einer Mittelachse des Endabschnitts, zulaufende Seitenkanten aufweisen, die miteinander einen Winkel von 360°/n einschließen und diese Endabschnitte so ausgebildet sind, dass die Seitenkanten der Endabschnitte im verbundenen Zustand an die Seitenkanten eines Endabschnitts eines benachbarten ersten gleichartigen Tragelements anliegen. Es versteht sich, dass ein Toleranzspalt zwischen den Seitenkanten existieren kann.

Um bei Verbindungsknotenanordnungen in einem Tragwerk, an der nicht eine maximal vorgesehene Anzahl von ersten Tragelementen über Endabschnitte miteinander verbunden werden, im fixierten Zustand der Verbindungsknotenanordnung ein Verkippen der Fixierelemente gegeneinander in der Ebene, in der die Endabschnitte angeordnet sind, zu vermeiden und auszuschließen, sind Ausgleichselemente zum Ersetzen der "fehlenden" Endabschnitte vorgesehen, welche im Wesentlichen wie ein Klemmabschnitt eines Endabschnitts eines ersten langgestreckten Tragelements ausgebildet sind. Hierdurch kann ein Verkanten der Fixierelemente beim Ausbilden der Fixierkraft über das Verbindungselement verhindert werden und darüber hinaus gewährleistet werden, dass Drehmomente von ersten Tragelementen über eine Seitenkante eines Endabschnitts auf eine Seitenkante eines Ausgleichselements übertragen werden können und somit der Formschluss zwischen dem Ausgleichselement und den Fixierelementen genutzt werden kann, um diese Drehmomente in die Verbindungsknotenanordnung einzuleiten.

Bei anderen Ausführungsformen kann vorgesehen sein, dass je Endabschnitt in der Oberseite oder in der Unterseite des Klemmabschnitts zwei Vertiefungen oder zwei Vorsprünge vorgesehen sind, oder dass in einer Oberseite oder einer Unterseite jeweils eine Vertiefung und ein Vorsprung ausgebildet sind. Entsprechend sind die oberen und unteren Fixierelemente ausgebildet. Entscheidend ist erneut, dass eine Anordnung der Vorsprünge und Vertiefungen in einem Fixierelement punktsymmetrisch zu einem Mittelpunkt der Unterseite oder Oberseite ist, gegen die die Endabschnitte anliegen. Nur so kann erreicht werden, dass die ersten Tragelemente bei einem Bausatz möglichst in allen Orientierungen verbaut werden können.

Ebenso ist es möglich, Vertiefungen vorzusehen, die sich bis an den Rand einer Seitenkante eines Endabschnitts erstrecken, sodass Vorsprünge des Fixierelements sich in Vertiefungen von benachbart in der Verbindungsknotenanordnung verbundenen ersten Tragelementen eingreifen. Analog können Vorsprünge in dem Endabschnitt ausgebildet sein, die sich bis an eine Seitenkante erstrecken, so dass sich zwei Vorsprünge benachbarter Endabschnitte in eine Vertiefung eines Fixierelements eingreifen.

Bei einer Ausführungsform ist vorgesehen, dass ein oberes Federelement zwischen dem oberen Fixierelement und einem Widerlager des Verbindungselements angeordnet ist, und wobei das Verbindungselement in einen teilfixierten Zustand versetzbar ist, in dem das Verbindungselement zumindest das obere Fixierelement und das untere Fixierelement miteinander verbindet, aber nicht die zur Fixierung der Endabschnitte zwischen den Fixierelementen notwendige Fixierkraft ausübt, wobei das Federelement im teilfixierten Zustand die Fixierelemente gegeneinander presst. Aufgrund der formschlüssigen Verbindung, welche beim Eingreifen eines Vorsprungs eines Fixierelements in eine Vertiefung in dem Endabschnitt gewährleistet ist, bleiben die einzelnen Tragelemente in der Verbindungsknotenanordnung auch im teilfixierten Zustand des Verbindungselements in der Position, in der sie sich auch im arretierten bzw. fixierten Zustand befinden. Über ein leichtes Verkippen oder Verkanten oder Anheben bzw. Absenken eines Endabschnitts kann jedoch auf einfache Weise erreicht werden, dass die formschlüssige Verbindung gelöst wird, und so ein einzelnes Tragelement aus der Verbindungsknotenanordnung entfernt oder in diese eingefügt werden kann. Dies erleichtert eine Montage der Verbindungsknotenanordnung deutlich. Der gleiche Effekt wird bei einer Ausführungsform erzielt, bei der die Endabschnitte Vorsprünge aufweisen, die in Vertiefungen eines Fixierelements eingreifen.

Sind die Vertiefungen in den Klemmabschnitten der Endabschnitte, als Materialeinwölbungen ausgebildet und die Vorsprünge in den Fixierelementen, die in diese Vertiefungen eingreifen, ebenfalls durch Materialvorwölbungen gebildet, welche in der Regel eine kugelartige Gestalt aufweisen, so kann auch durch eine axialwirkende Kraft, die entlang einer Längsachse eines Tragelements wirkt ein Lösen eines Endabschnitt aus der Verbindungsknotenanordnung im teilfixierten Zustand erreicht werden. Eine Kante der Vertiefung gleitet in einem solchen Fall auf den als Vorwölbung ausgebildeten Vorsprung auf, und spannt hierbei das Federelement, welches die Fixierelemente gegeneinander presst. Eben solches geschieht beim Einfügen eines Endabschnitts in eine Position der Verbindungsknotenanordnung, in der noch kein Endabschnitt eingefügt ist. Der Endabschnitt gleitet auf den als Vorwölbung ausgebildeten Vorsprung auf, und drückt hierbei die über das Federelement zusammengepressten Fixierelemente auseinander, bis der Vorsprung in die Vertiefung des Endabschnitts des eingefügten ersten Tragelements eingreift. In dieser Stellung entspannt sich das Federelement entsprechend wieder bis auf seine ursprünglich vorhandene Vorspannung in dem teilfixierten Zustand. Das Analoge gilt, wenn die Vorsprünge auf den Endabschnitten und die Vertiefungen in dem einen Fixierelement ausgebildet sind.

Bei einer alternativen Ausführungsform ist das Verbindungselement durch eine Durchgangsöffnung des oberen Fixierelements und eine Durchgangsöffnung des unteren Fixierelements mit einem Gegenelement lösbar verbunden, welches beispielsweise ein zweites Verbindungselement sein kann, und bewirkt in dem fixierten Zustand zwischen dem Verbindungselement und dem Gegenelement die Fixierkraft, die die Fixierelemente gegeneinander presst, und ist ein unteres Federelement zwischen dem Gegenelement und dem unteren Fixierelement angeordnet, dass in dem teilfixierten Zustand des Verbindungselements, in dem das Verbindungselement zumindest das obere Fixierelement und das untere Fixierelement miteinander verbindet, aber nicht die zur Fixierung der Endabschnitte zwischen den Fixierelementen notwendige Kraft ausübt, das untere Fixierelement gegen das obere Fixierelement presst.

Das Gegenelement ist vorzugsweise ein zweites Tragelement.

Bei einer anderen Ausführungsform können ein oberes und ein unteres Federelement vorgesehen sein.

Um ein dreidimensionales Tragwerk zu bilden, ist vorgesehen, dass in Verbindungsknotenanordnungen miteinander verbundene erste Tragelemente zweidimensionale Tragwerkstrukturen ausbilden, die über zweite langgestreckte Tragelemente, welche zueinander gleichartig sind, miteinander verbunden sind, mit deren Stirnseiten die Verbindungselemente der Verbindungsknotenanordnungen verbunden sind.

Ein solches Tragwerk sieht Ausgleichselemente vor, welche eine Gestalt eines abgeplatteten Endabschnitts eines ersten Tragelements aufweisen und die anstelle von fehlenden Endabschnitten von ersten Tragelementen in Verbindungsknotenanordnungen eingefügt sind, wenn in diesen eine geringere Anzahl als die maximal mögliche Anzahl von gleichartigen miteinander verbindbaren ersten Tragelementen miteinander verbunden sind.

Ein Bausatz weist somit neben den ersten Tragelementen und Verbindungselementen sowie Fixierelementen bei einer bevorzugten Ausführungsform zweite gleichartige Tragelemente auf, an deren Stirnseite die Verbindungselemente befestigbar sind, sodass über die ersten gleichartigen Tragelemente ebene Tragstrukturen ausbildbar sind, die senkrecht hierzu durch die zweiten Tragelemente verbindbar sind.

Zusätzlich weist ein solcher Bausatz vorzugsweise Ausgleichselemente auf, die, wie beschrieben, ausgebildet sind.

Vorteilhafte Ausführungsformen der Erfindung ergeben sich zusätzlich aus der Figurenbeschreibung. Diese zeigt:
- Fig. 1: eine schematische explosionsartige Schnittansicht einer Verbindungsknotenanordnung;
- Fig. 2: eine schematische Draufsicht auf vier erste Tragelemente in einer Anordnung, in der sie in einer Verbindungsknotenanordnung miteinander verbindbar sind;
- Fig. 3: eine schematische Draufsicht auf eine Verbindungsknotenanordnung;
- Fig. 4: eine schematische Draufsicht auf ein Fixierelement;
- Fig. 5: eine schematische Schnittansicht des Fixierelements nach Fig. 4 entlang einer Schnittlinie A-A;
- Fig. 6: eine schematische explosionsartige Schnittansicht einer Ausführungsform, in der das Federelement an anderer Stelle angeordnet ist;
- Fig. 7: eine schematische explosionsartige Schnittansicht einer weiteren Ausführungsform einer Verbindungsknotenanordnung
- Fig. 8: eine schematische Draufsicht auf eine Verbindungsknotenanordnung der Ausführungsform nach Fig. 7;
- Fig. 9: eine schematische Draufsicht auf ein Fixierelement der Ausführungsformen nach Fig. 7 und 8;
- Fig. 10: eine schematische Schnittansicht durch ein Fixierelement der Ausführungsform nach Fig. 9 entlang einer Schnittlinie B-B;
- Fig. 11: eine schematische explosionsartige Schnittansicht noch einer weiteren Ausführungsform ähnlich zu der nach den Figuren 7 bis 10;
- Fig. 12: eine schematische Draufsicht auf ein Ausgleichelement für Verbindungsknoten gemäß den Ausführungsformen nach Fig. 1 bis 6; und
- Fig. 13: eine schematische Draufsicht auf ein Ausgleichelement für Verbindungsknoten gemäß den Ausführungsformen nach Fig. 7 bis 11.

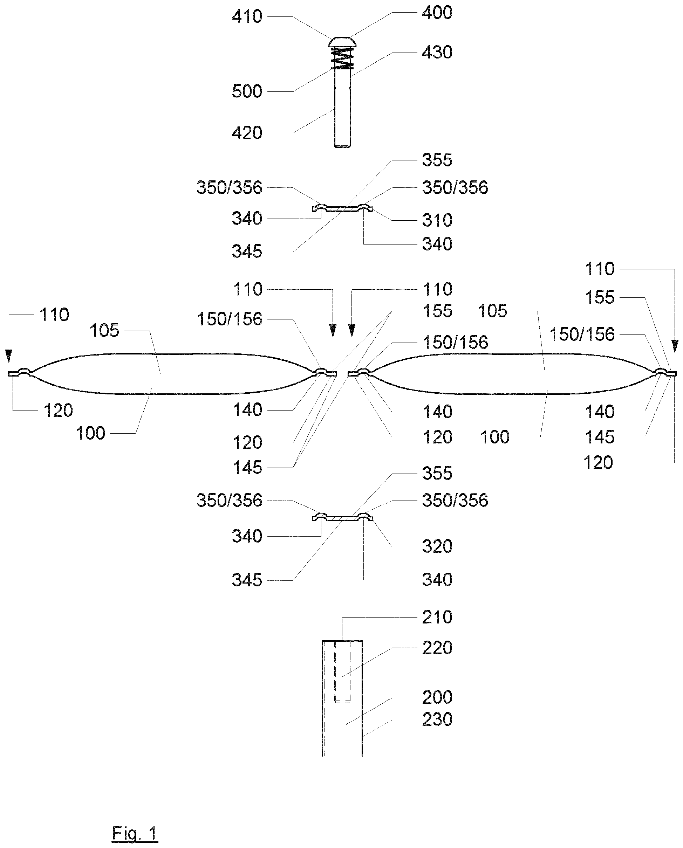

In Fig. 1 ist schematisch eine explosionsartige Schnittansicht einer Verbindungsknotenanordnung 1 dargestellt. In einer solchen Verbindungsknotenanordnung 1, welche verkürzt auch Verbindungsknoten genannt wird, werden erste Tragelemente 100 miteinander verbunden, die ein zweidimensionales Tragwerk ausbilden. In der dargestellten Ausführungsform wird in dem Verbindungsknoten 1 zusätzlich ein zweites Tragelement 200 mit den ersten Tragelementen 100 verbunden, welches sich in eine dritte Dimension erstreckt. Vorzugsweise ist das zweite Tragelement 200 senkrecht zu der Ebene ausgerichtet, in der die ersten Tragelemente 100 angeordnet sind. Die ersten Tragelemente 100 sind vorzugsweise langgestreckte Rohre, welche an ihren diametral gegenüberliegenden Enden 110 abgeplattete Endabschnitte 120 aufweisen.

In einem Verbindungsknoten 1 werden die abgeplatteten Endabschnitte 120 zwischen einem oberen Fixierelement 310 und einem unteren Fixierelement 320 geklemmt. In der dargestellten Ausführungsform sind das untere und das obere Fixierelement identisch ausgebildet. Um allgemein auf ein oder mehrere Fixierelemente zu verweisen, wird auch das Bezugszeichen 300 verwendet.

Eine für das Klemmen der Endabschnitte 120 zwischen den Fixierelementen 300 notwendige Fixierkraft wird über ein Verbindungselement 400 erzeugt, welches beispielsweise als Schraube mit einem Rundkopf 410 und einem Schraubenkopfantrieb in Form eines Innensechskants (Inbus) ausgebildet ist. Es können auch andere Schraubenkopftypen und Schraubenkopfantriebe verwendet werden.

Das als Schraube ausgebildete Verbindungselement 400 weist vorzugsweise ein metrisches Gewinde 420 zumindest an einem unteren Ende eines Schafts 430 auf. Dieses wird in ein Innengewinde 220 in einer Stirnseite 210 des zweiten Tragelements 200 eingeschraubt. Das Innengewinde 220 ist beispielsweise über eine Mutter ausgebildet, die an der Stirnseite 210 über eine Quetschung einer Rohrwand 230 des zweiten Tragelements 200 befestigt ist. Vorzugsweise ist das zweite Tragelement 200 ebenfalls ein Rohr, vorzugsweise ein Edelstahlrohr.

Im arretierten und fixierten Zustand des Verbindungselements 400 in dem zweiten Tragelement 200 wird zwischen den Rundkopf 410 und der Stirnseite 210 des zweiten Tragelements die Fixierkraft ausgebildet, die auf das obere Fixierelement 310 und das untere Fixierelement 320 in der Weise wirkt, dass diese gegeneinander gepresst werden. Hierdurch werden die Endabschnitte 120 der ersten Tragelemente 100 zwischen den Fixierelementen gepresst.

Die Endabschnitte 120 der ersten Tragelemente 100 weisen jeweils in einem Klemmabschnitt 130 des Endabschnitts 120 eine Vertiefung 140 in einer Unterseite 145 des Endabschnitts 120 auf. Bei der dargestellten Ausführungsform ist die Vertiefung 140 über eine Materialverformung in dem Endabschnitt 120 in der Weise ausgebildet, dass an einer gegenüberliegenden Oberseite 155 eine entsprechende Vorwölbung 150 ausgebildet ist, die einen Vorsprung 156 darstellt.

Ebenso weisen die Endabschnitte 120 somit einen Vorsprung 156 an der Oberseite 155 auf, der in der dargestellten Ausführungsform mit einer Vertiefung 140 in Form einer Einwölbung auf der Unterseite 145 einhergeht.

Es ist aber auch möglich, bei anderen Ausführungsformen die Vertiefungen ohne eine gegenüberliegende Vorwölbung beispielsweise als Durchgangsloch oder Sackloch auszubilden.

Bei wieder einer anderen Ausführungsform können die Vorsprünge ohne eine korrespondierende Vertiefung auf der Gegenseite gebildet sein, beispielsweise über einen Material auftragenden Schweißpunkt.

Das obere Fixierelement 310 und das untere Fixierelement 320 sind entsprechend so ausgebildet, dass das untere Fixierelement 320 an einer Oberseite 345 als Vorwölbungen 150 ausgebildete Vorsprünge 156 aufweist. Entsprechend sind auf der Unterseite 345 Vertiefungen 340 ausgebildet. Bei der dargestellten Ausführungsform sind das obere Fixierelement 310 und das untere Fixierelement 320 identisch ausgebildet. Entsprechend greifen in einem fixierten Zustand der Verbindungsknotenanordnung 1, in dem das als Schraube ausgebildete Verbindungselement 400 fest in das zweite Tragelement 200 geschraubt ist, die als Vorwölbungen 350 ausgebildeten Vorsprünge 356 des unteren Fixierelements 320 in die entsprechenden Vertiefungen 140 der Endabschnitte 120 der ersten Tragelemente 100. Genauso greifen auch die Vorwölbungen 150 der Endabschnitte 120 der ersten Tragelemente 100 wiederum in die Vertiefungen 340 des oberen Fixierelements 310 ein. Im fixierten Zustand ist somit neben einer kraftschlüssigen Verbindung auch eine formschlüssige Verbindung realisiert.

Bei der dargestellten Ausführungsform ist ein vorgesehenes Federelement 500 zwischen dem Rundkopf 410 des Verbindungselements 400 und dem oberen Fixierelement 310 angeordnet. Der Rundkopf 410 dient hier als Widerlager. Das Federelement 500 ist beispielsweise als Schraubenfeder ausgeführt. Im fixierten Zustand ist die Schraubenfeder vollständig komprimiert, sodass die Fixierkraft des Schraubenrundkopfes 410 über das Federelement 500 auf das obere Fixierelement 310 übertragen wird. In einem teilfixierten Zustand, in dem das Verbindungselement 400 mit seinem Gewinde 420 in das Innengewinde 220 des zweiten Tragelements 200 zwar eingeschraubt, aber dort nicht fest angezogen ist, sodass zwar das obere Fixierelement 310 und das untere Fixierelement 320 über das Verbindungselement 400 miteinander verbunden sind, aber nicht die zum Klemmen der Endabschnitte 120 notwendige Fixierkraft ausgeübt wird, sorgt das Federelement 500 dafür, dass das obere Fixierelement 310 gegen das untere Fixierelement 320 gepresst wird. Hierdurch werden die zwischen den Fixierelementen 310, 320 angeordnete Endabschnitte 120 in der Verbindungsknotenanordnung nach einem Aspekt gehalten, da die über die Vorwölbungen 350 ausgebildeten Vorsprünge 356 des unteren Fixierelements in die Vertiefungen 140 eingreifen. Nach einem weiteren Aspekt beleiben die Endabschnitte 120 in ihren Positionen, weil die Vorsprünge 156 in die Vertiefungen 340 des oberen Fixierelements eingreifen. In der dargestellten Ausführungsform wirken beide Aspekte zusammen, es würde jedoch bereits einer dieser Aspekte ausreichen, um den Effekt zu bewirken.

Trotz dieses doppelten Formschlusses ist es einfach, einen Endabschnitt aus der Verbindungsknotenanordnung zu entfernen oder in die Verbindungsknotenanordnung einzufügen, da das obere Fixierelement relativ zu dem unteren Fixierelement 320 über ein Spannen des Federelements 500 auseinander bewegt werden kann. Der Endabschnitt und/oder das Fixierelement können bei einer ausreichenden axial entlang einer Längsachse 105 des ersten Tragelements 100 wirkenden Kraft jeweils auf den Vorsprung des anderen Bauteils aufgleiten und hierüber ein Spannen des Federelements 500 und auseinanderweichen der Fixierelemente 310,320 bewirken. Eine Verkantung oder Verdrehung des ersten Tragelements 100 um seine Längsachse 105 kann dieses Spannen des als Schraubenfeder ausgebildeten Federelements 500 und auseinanderdrücken der Fixierelemente 310, 320 unterstützen und erleichtern. Die Fixierelemente 310, 320 weichen hierbei in der Regel so auseinander, dass der Formschluss zwischen den Fixierelementen 310, 320 und den übrigen Endabschnitten 120 der ersten Tragelemente 100 erhalten bleibt.

Beim Einfügen eines Endabschnitts einer Ausführungsform, bei der in den Endabschnitten mindestens eine Vertiefung in der Form eines Sacklochs oder eines Durchgangslochs ausgebildet ist, ohne das korrespondierend ein Vorsprung auf der gegenüberliegenden Seitenfläche ausgebildet ist, gleitet der Endabschnitt beim Einfügen in eine Verbindungsknotenanordnung im teilfixierten Zustand auf den entsprechenden Vorsprung eines der Fixierelemente auf, drängt die Fixierelemente auseinander und spannt hierbei das Federelement bis der Vorsprung in die mindestens eine Vertiefung des Endabschnitts eingreift und so das Federelement wieder entspannt wird. Analoges gilt für eine Ausführungsform, bei der die Endabschnitte mindestens einen Vorsprung ohne eine korrespondierende Vertiefung auf der gegenüberliegenden Seitenfläche aufweisen. Hier gleitet ein Fixierelement auf den Vorsprung des Endabschnitts auf, bis dieser aus dem Klemmbereich der Fixierelemente entfernt ist (Entfernen eines ersten Tragelements) oder der Vorsprung in eine Vertiefung eines der Fixierelemente eingreift (Einfügen eines ersten Tragelements).

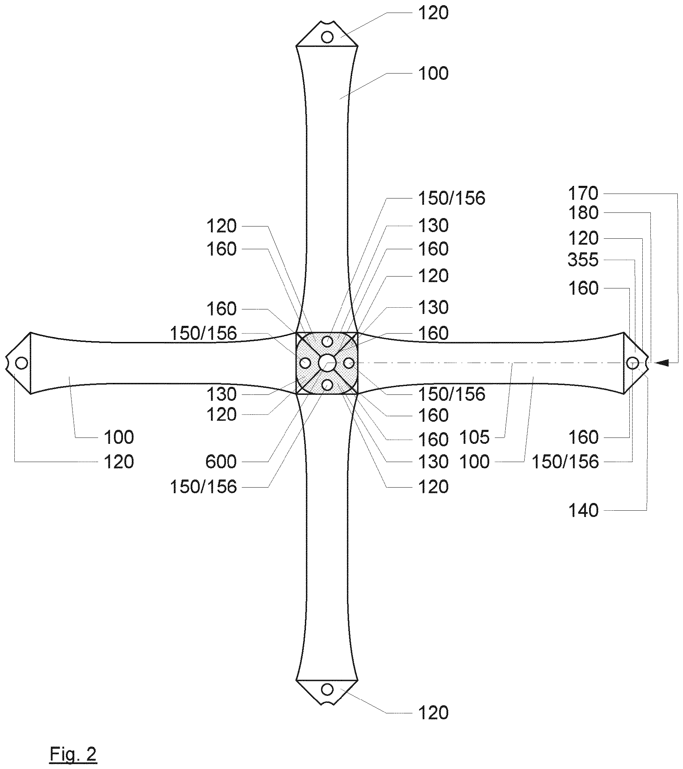

In Fig. 2 ist schematisch eine Draufsicht auf vier erste Tragelemente 100 dargestellt, die relativ so zueinander angeordnet sind, wie sie in einem Verbindungsknoten, d.h. in der Verbindungsknotenanordnung 1, miteinander verbunden werden können. Gleiche technische Elemente sind in allen Figuren mit denselben Bezugszeichen versehen und zu den einzelnen Figuren nur die technischen Unterschiede und/oder besonders gut zu erkennenden Merkmale beschrieben. In der Draufsicht auf die ersten Tragelemente 100 ist gut zu erkennen, dass die Endabschnitte zu der Spitze 110 zulaufende Seitenkanten 160 aufweisen, die zueinander einen 90°-Winkel einschließen. Darüber hinaus ist zu erkennen, dass die abgeplatteten Endabschnitte 120 an einer Spitze 170 jeweils eine Aussparung 180 aufweisen. Diese ist vorgesehen, um in einem Zentrum 600 der Endabschnitte 120 einen Durchtritt des Verbindungselements 400 (vergleiche Fig. 1) durch die Ebene zu ermöglichen, in der die Endabschnitte 120 angeordnet sind.

Gut zu erkennen ist, dass in einer Verbindungsknotenanordnung die Seitenkanten 160 der Endabschnitte 120 jeweils an eine Seitenkante 160 eines benachbarten Endabschnitts eines benachbarten ersten Tragelements 100 angrenzen. Hierdurch wird im Zusammenwirken mit den Vorsprüngen 356 des unteren Fixierelements 320 und den Vertiefungen 140 in den Endabschnitten 120 und/oder der Vorsprünge 156 der Endabschnitte 120 mit den Vertiefungen 340 des oberen Fixierelements 310 erreicht, dass eine formschlüssige Verbindung der ersten Tragelemente 100 ausgebildet ist, welches eine bessere Stabilität gegen über Verdrehungen der einzelnen Tragelemente bezüglich einer durch das Verbindungselement festgelegten Asche durch das Zentrum 600 gegeneinander gewährleistet und ein Einleiten von auftretenden Kräften und Drehmomenten in eine gesamte Tragstruktur erleichtert.

In Fig. 2 sind darüber hinaus die Klemmabschnitte 130 der einzelnen Endabschnitte schraffiert dargestellt. Die konkrete Ausgestaltung der Klemmabschnitte 130 ist selbstverständlich von der Formgebung der Fixierelemente 310, 320 nach Fig. 1 abhängig.

Zu erkennen ist ferner, dass die Vorwölbungen 150 und entsprechend die als Einwölbungen ausgebildeten unter der Zeichnungsebene befindlichen Vertiefungen 140 der Endabschnitte 120 auf der Längsachse 105 angeordnet sind. Die Vertiefungen 140 und die Vorsprünge 156 sind somit umlaufend von dem Endabschnitt umgeben. Die Vertiefung 140 ist in der Ebene der Oberseite oder der Unterseite geschlossen, welches einen Formschluss in allen Richtungen der Ebene, in der die Endabschnitte angeordnet sind, ermöglicht.

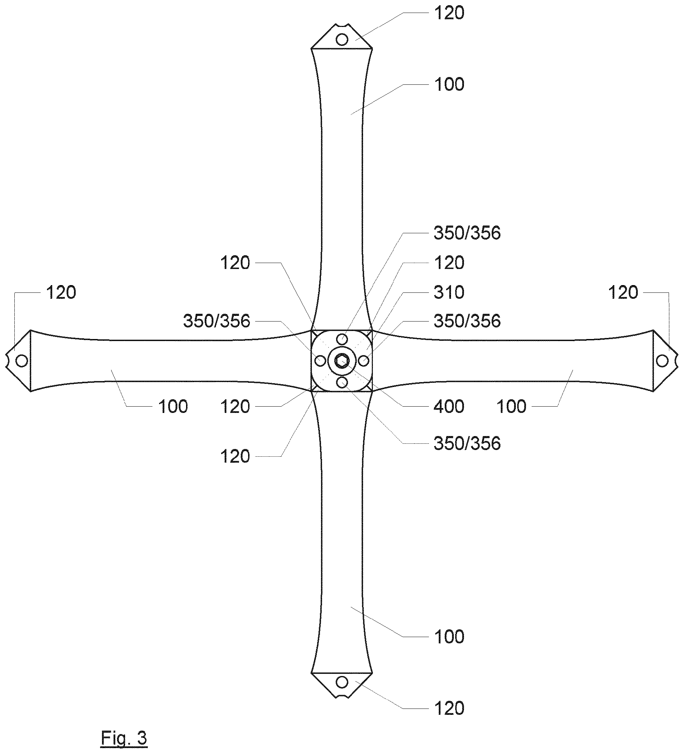

In Fig. 3 ist eine schematische Draufsicht auf eine Verbindungsknotenanordnung im fixierten Zustand gezeigt. Zu erkennen ist, dass das obere Fixierelement 310 eine rechteckige Gestalt mit abgerundeten Ecken aufweist. Zusätzlich sind vier Vorwölbungen 350 erkennbar.

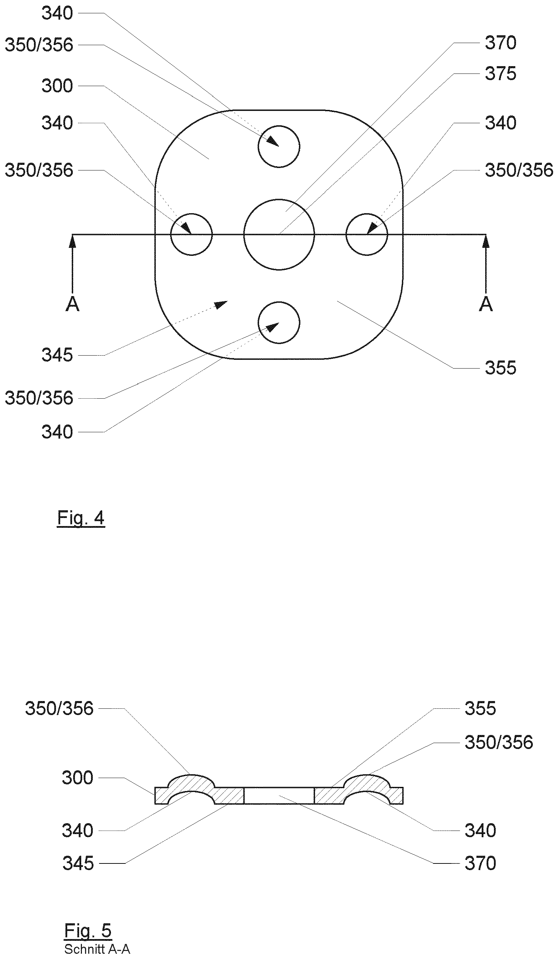

In Fig. 4 ist eine Draufsicht auf ein Fixierelement 300 gezeigt, welches als flache Scheibe mit rechteckigem Querschnitt und abgerundeten Ecken ausgebildet ist. Das Fixierelement 300 kann sowohl als oberes Fixierelement 310 als auch als unteres Fixierelement 320 eingesetzt werden. Zentral in einer Mitte findet sich eine kreisförmig ausgebildete Durchbrechung 370 zum Aufnehmen eines Verbindungselements. Punktsymmetrisch zu einem Mittelpunkt 375 der Durchbrechung 370 sind vier Vorsprünge 356 in Form von Vorwölbungen 350 auf der Oberseite 355 des Fixierelements 310/320 ausgebildet. Die Anordnung der Vorsprünge 356 ist jedoch nicht rotationssymmetrisch zu irgendeiner Achse (nicht dargestellt) durch den Mittelpunkt 375. Durch den Mittelpunkt 375 und die Vorwölbungen 350 verlaufende Geraden (nicht dargestellt) bilden jeweils Seitenhalbierende der vier Seitenkanten 360.

In Fig. 5 ist eine schematische Schnittansicht durch ein Fixierelement 300 nach Fig. 4 entlang einer Schnittlinie A-A dargestellt. Gut zu erkennen ist, dass mit den Vorwölbungen 350 entsprechende Einwölbungen bzw. Vertiefungen 340 korrespondieren. Die Vertiefungen und Vorwölbungen sind über eine Materialverformung ausgebildet. Die Vorsprünge 356 sind somit durch die als Vorwölbungen 350 ausgebildeten Materialverformungen gebildet. Ansonsten sind eine Unterseite 345 und eine Oberseite 355 planparallel zueinander orientiert. Vorzugsweise ist ein solches Fixierelement 300 aus Metall, besonders bevorzugt aus Stahl, insbesondere Edelstahl gefertigt.

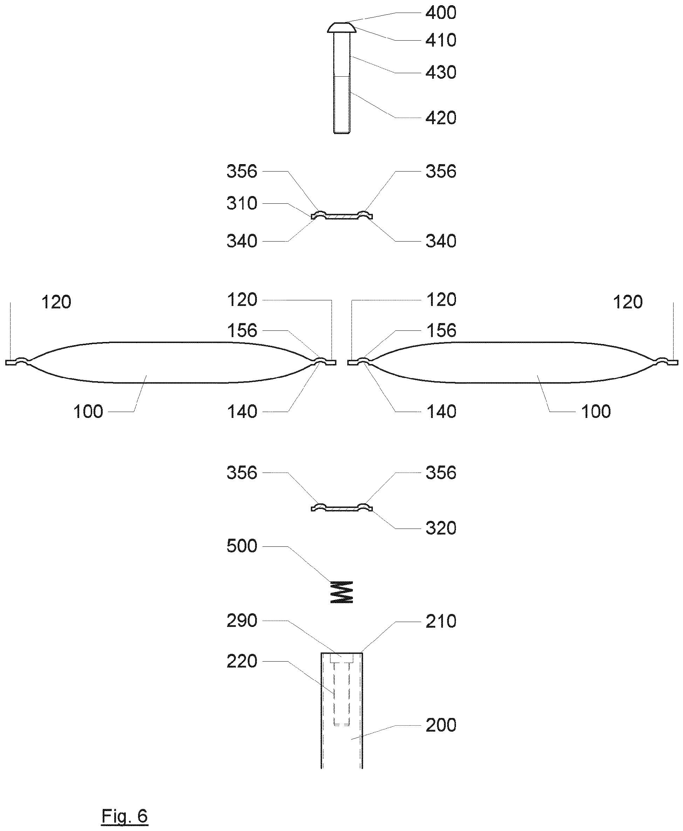

In Fig. 6 ist eine weitere Variante einer Verbindungsknotenanordnung 1 in einer explosionsartigen Schnittansicht gezeigt. Dieselben technischen Merkmale sind erneut mit denselben Bezugszeichen versehen. Bei dieser Ausführungsform ist das Federelement 500 zwischen dem unteren Fixierelement 320 und dem als Gegenelement des Verbindungselements 400 dienenden zweiten Tragelement 200 angeordnet. Bei dieser Ausführungsform ist in der Stirnseite 210 ein Einsenkungsbereich 290 ausgebildet, der im fixierten Zustand der Verbindungsknotenanordnung 1, das dann nahezu vollständig gespannte und zusammengedrückte Federelement 500 vollständig aufnehmen kann. Das untere Fixierelement 320 liegt in diesem Fall mit seiner Unterseite 345 flächig gegen die Stirnseite 210 bzw., wenn das zweite Tragelement ein Rohr ist, gegen dessen Rohrwand an. Das Federelement ist im fixierten Zustand am Übertragen der Fixierkraft nicht beteiligt. Hierdurch ist eine Materialbeanspruchung des Federelements 500 verringert und dessen Haltbarkeit dadurch gesteigert.

Ein ähnlicher Effekt kann mit einem Verbindungselement bei der Ausführungsform ähnlich zu der nach Fig. 1 erreicht werden, bei dem angrenzend an den Schaft des als Schraube ausgebildeten Verbindungselements an einer Unterseite des Schraubenkopfes eine umlaufende Nut zur Aufnahme des Federelements im fixierten Zustand der Verbindungsknotenanordnung ausgebildet ist. Eine solche umlaufende Nut oder Vertiefung kann alternativ oder zusätzlich je nach Materialstärke der Fixierelemente auch umlaufend um die Durchbrechung im Zentrum für denselben Zweck auf einer Oberseite, einer Unterseite oder auf beiden Seiten eines Fixierelements vorgesehen sein.

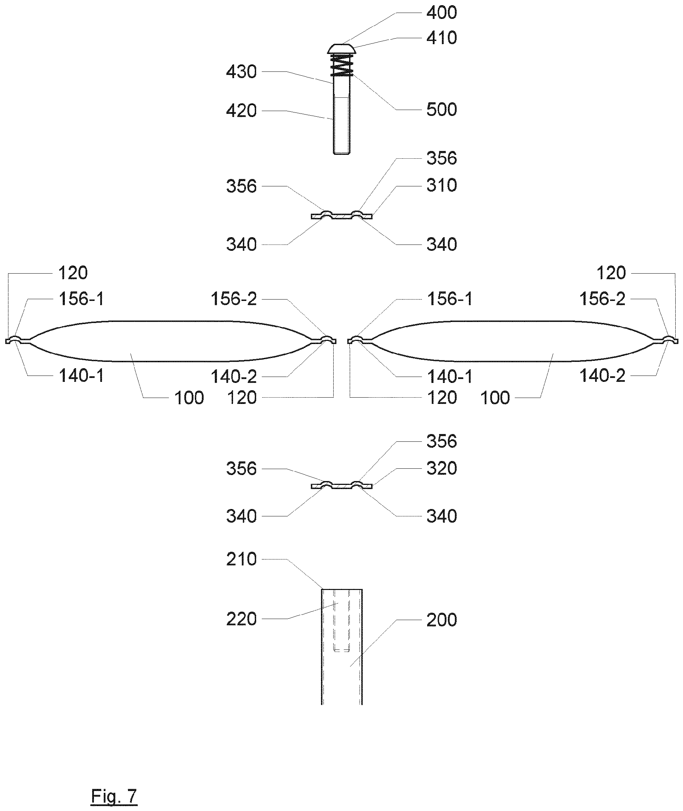

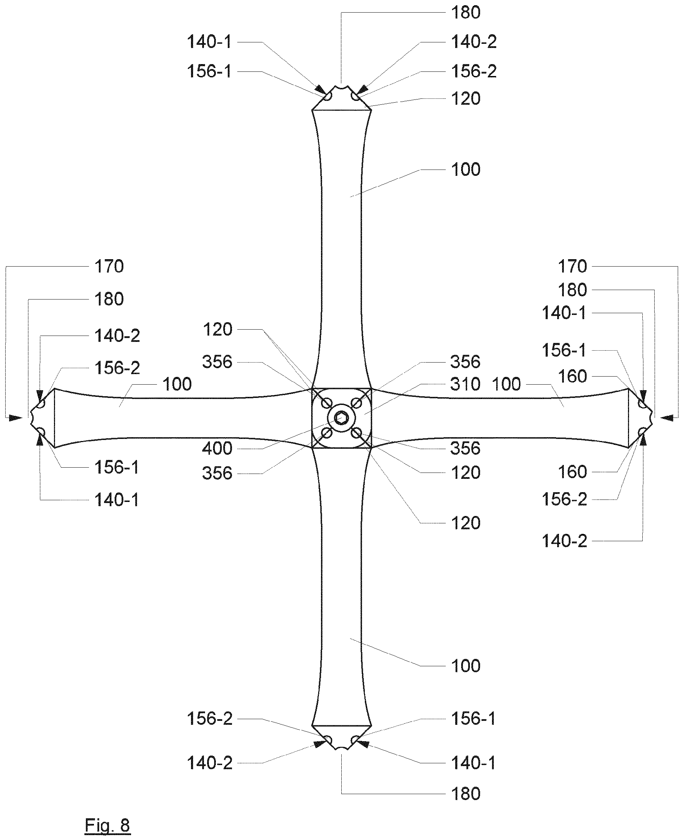

In Fig. 7 ist eine explosionsartige Schnittdarstellung einer weiteren Ausführungsform einer Verbindungsknotenanordnung 1 schematisch dargestellt. In Fig. 8 ist eine entsprechende eine Draufsicht auf die Verbindungsknotenanordnung schematisch gezeigt. Diese Ausführungsform unterscheidet sich dadurch, dass die abgeplatteten Endabschnitte 120 jeweils zwei Vertiefungen 140-1, 140-2 aufweisen, die über eine Einwölbung des Endabschnittsmaterials gebildet sind. An einer Oberseite 155, auf die in Fig. 8 geblickt wird, sind somit hiermit korrespondierend zwei Vorsprünge 156-1, 156-2 in Form von Auswölbungen 150-1, 150-2 ausgebildet. Durch diese auf der Oberseite ausgebildeten Vorsprünge 156 ist im Zusammenwirken mit dem oberen Fixierelement 310 und dem unteren Fixierelement 320 auch im teilfixierten Zustand gewährleistet, dass eine formschlüssige Verbindung ausgebildet ist, die das erste Tragelement 100 in der Verbindungsknotenanordnung 1 hält. Wird die Verbindungsknotenanordnung 1 dadurch fixiert, dass das als Schraube ausgebildete Verbindungselement 400 in das Innengewinde 220 des zweiten Tragelements 200 fest eingeschraubt wird, so wird dieser Formschluss fixiert und zusätzlich ein Kraftschluss zwischen der Unterseite 345 des oberen Fixerelements 310 und der Oberseite 355 des ersten Tragelements und zwischen der Unterseite 145 des Endabschnitts 120 des ersten Tragelements 100 und der Oberseite 355 des unteren Fixierelements 320 ausgebildet.

Die Tatsache, dass zwei Vorsprünge 156-1, 156-2 auf jedem Endanschnitt ausgebildet sind und mit zwei unterschiedlichen Vertiefungen 340 des oberen Fixierelements 310 wechselwirken, bewirkt, dass ein unerwünschtes Verdrehen des ersten Tragelements 100 relativ zu der Sollposition in der Verbindungskontenanordnung 1 erschwert wird.

Gleichartig wirkt bei geeigneter Ausgestaltung auch die Einkerbung oder Aussparung 180 an der Spitze 170 die mit dem Verbindungselement 400 bei einer Verdrehung wechselwirkt. Dieser Effekt tritt auch bei den Ausführungsformen nach Fig. 1 bis 6 auf, wenn eine Drehung um die mindestens eine Vertiefung 140 oder den mindestens einen Vorsprung 156 des Endabschnitts 120 betrachtet wird.

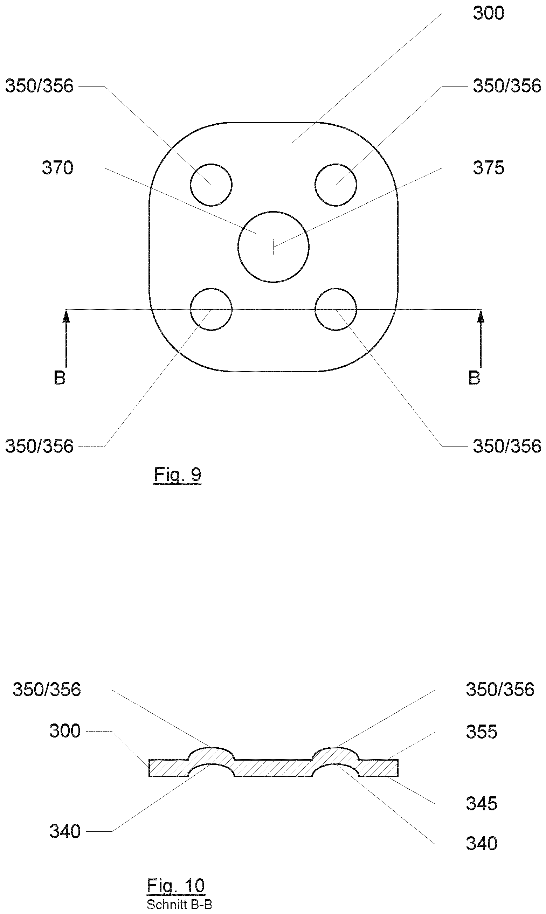

In Fig. 9 ist schematisch eine Draufsicht auf ein Fixierelement dieser Ausführungsform nach Fig. 7 und 8 gezeigt. Diese unterscheidet sich von der Ausführungsform nach Fig. 4 lediglich dadurch, dass die Vorsprünge 356, welche durch Vorwölbungen 350 gebildet sind, und entsprechende Vertiefungen auf der Gegenseite punktsymmetrisch zu dem Mittelpunkt 375 in der Weise angeordnet sind, dass die Vorwölbungen 350 auf Diagonalen der rechteckigen Grundstruktur des als Scheibe ausgebildeten Fixierelements 300310/320 liegen. Jeder Vorsprung 356 wechselwirkt bei dieser Ausführungsform jeweils mit zwei Vertiefungen 140-1, 140-2 benachbarter Endabschnitte 120 der benachbarten ersten Tragelemente 100. Entsprechendes gilt für jede Vertiefung 340 im Bezug auf die Vorsprünge 156-1, 156-2 (vergleiche jeweils Fig. 7).

In Fig. 10 ist eine entsprechende Schnittansicht durch das Fixierelement 300 entlang der Linie B-B gezeigt. Das Fixierelement 300 kann als unteres Fixierelement 320 und/oder als oberes Fixierelement 310eingesetzt werden.

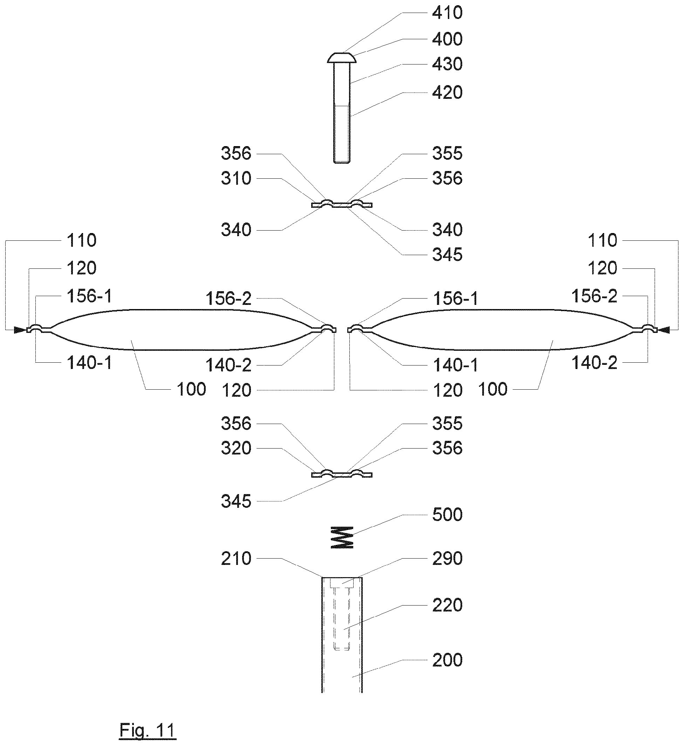

In Fig. 11 ist eine weitere schematische explosionsartige Schnittansicht einer Ausführungsform ähnlich zu der nach Fig. 7 und 8 dargestellt, bei der jedoch erneut das Federelement zwischen dem Rundkopf 410 und dem oberen Fixierelement 310 angeordnet ist. Ansonsten gleicht die Ausführungsform der Fig. 11 der der Figuren 7 bis 10. Ebenso sind Ausführungen denkbar, bei denen sowohl ein oberes als auch ein unteres Federelement vorgesehen sind.

Um ein zweidimensionales Tragwerk auszubilden, kann als Gegenelement für das als Schraube ausgebildete Verbindungselement auch eine Mutter anstelle des zweiten Tragelements dienen. Werden hingegen zusätzliche zweite Tragelemente verwendet, so können dreidimensionale Strukturen aufgebaut werden. Jeweils wird nur eine sehr begrenzte Anzahl unterschiedlicher Elemente benötigt, nämlich erste Tragelemente, Fixierelemente, Verbindungselemente sowie ggf. zweite Tragelemente und Federelemente und vorzugsweise Ausgleichselemente. Die ersten Tragelemente sind gleichartig ausgebildet, können jedoch unterschiedliche Längen, d.h. Abstände zwischen den Enden aufweisen. Dasselbe gilt für die zweiten Tragelemente, welche in einem Tragwerk jedoch vorzugsweise gleiche Längen zwischen ihren Stirnseiten 210 aufweisen, sodass flächig ausgebildete Tragstrukturen, welche aus ersten Tragelementen gebildet sind, durch mehrere der zweiten Tragelemente miteinander verbunden werden können.

Bei den hier beschriebenen Ausführungsformen sind die Verbindungsknotenanordnungen jeweils so ausgebildet, dass vier erste Tragelemente in einer Verbindungsknotenanordnung miteinander verbindbar sind. Andere Ausführungsformen können vorsehen, dass in einer Verbindungsknotenanordnung beispielsweise maximal drei oder auch maximal mehr als vier erste Tragelemente miteinander verbunden werden.

Beim Ausbilden einer flächigen zweidimensionalen Tragstruktur aus den ersten Tragelementen treten an Ecken oder Rändern der Tragstruktur Verbindungsknotenanordnungen auf, in denen eine Anzahl der miteinander verbundenen ersten Tragelemente geringer als eine maximale Anzahl von ersten Tragelementen ist, die in der Verbindungsknotenanordnung miteinander verbindbar wären.

Bei den bisher beschriebenen Ausführungsformen, bei denen maximal vier erste Tragelemente in einer Verbindungsknotenanordnung miteinander verbindbar sind, treten somit an Rändern Verbindungsknotenanordnungen auf, in denen drei erste Tragelemente miteinander verbunden werden oder in Ecken sogar Verbindungsknotenanordnungen, in denen nur zwei erste Tragelemente miteinander verbunden werden. Um hier einen gleichmäßigen Krafteintrag über das Verbindungselement zwischen dem oberen Fixierelement und dem unteren Fixierelement zu erreichen und ein Verkippen gegenüber der flächigen Ausdehnung der Fixierelemente zu verhindern, wird anstelle eines Endabschnitts eines "fehlenden" ersten Tragelements jeweils ein Ausgleichselement eingefügt, welches eine Gestalt eines Endabschnitts oder zumindest des Klemmabschnitts eines Endabschnitts eines ersten Tragelements aufweist.

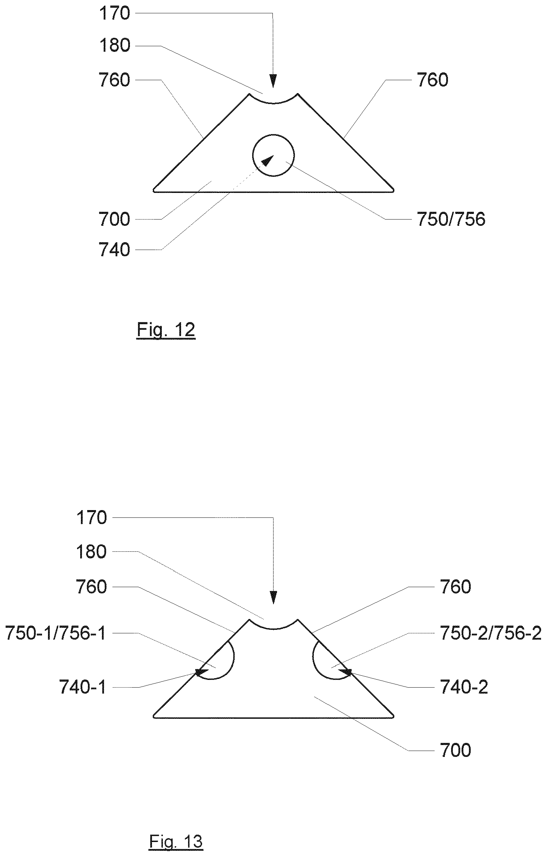

In Fig. 12 ist schematisch ein solches Ausgleichselement 700 für die Ausführungsformen nach Fig. 1 bis 6 gezeigt und in Fig. 13 ein Ausgleichselement 700 für die Ausführungsformen nach Fig. 7 bis 11. Diese weisen analog Seitenkanten 760, Vorsprünge 756, 756-1, 756-2 beispielsweise in Form von Vorwölbungen 750, 750-1, 750-2 an ihren Oberseiten 755, Vertiefungen 740, 740-1, 740-2 an ihren Unterseiten 745 sowie Einkerbungen 780 an ihren Spitzen 770 auf.

Die hier beschriebenen Verbindungsknotenanordnungen können verwendet werden, um Tragelemente eines Bausatzes zu verbinden, der erste Tragelemente, Fixierelemente, Verbindungselemente, ggf. zweite Tragelemente, ggf. Federelemente und vorzugsweise Ausgleichselemente umfasst. Mit einer geringen Anzahl von unterschiedlichen Elementen können somit verschiedenartigste Tragstrukturen unterschiedlicher Größe, insbesondere als dreidimensionale Gerüste für Möbelstücke, besonders bevorzugt für Regale mit offenen Feldern, geschlossen Flächen ausgebildet werden, wobei Böden, Abdeckungen, Seitenwände, usw. an der Tragstruktur befestigt werden. Hierzu können nicht dargestellte Befestigungshalterungen beispielsweise zwischen das untere Fixierelement und eine Stirnseite eines zweiten Tragelements eingefügt werden.

In den verschiedenen Figuren sind Ausführungsformen beschrieben, bei denen die Endabschnitte jeweils die mindestens eine Vertiefung in der Unterseite und/oder den mindestens einen Vorsprung auf der Oberseite des Endabschnitts aufweisen. Es ist selbstverständlich möglich Oberseite und Unterseite zu vertauschen. In einem solchen Fall können in der Unterseite des unteren Fixierelements dann Vorsprünge, beispielsweise in Form von Vorwölbungen auftreten, die ein flächiges Aufliegen auf der Stirnseite eines zweiten Tragelements oder ein umlaufendes Aufliegen auf einer Rohrwand eines zweiten Tragelements verhindern oder behindern. Hierfür können jedoch in der Stirnseite oder der Rohrwand entsprechende Einkerbungen oder Aussparungen vorgesehen werden, die die Vorsprünge aufnehmen. Hierüber kann auch ein Formschluss zwischen dem Fixierelement (und über das untere Fixierelement auch zwischen den ersten Tragelementen) und dem zweiten Tragelement herbeigeführt werden, welcher eine Einleitung von Kräften in das gesamte gebildete Tragwerk und eine Verteilung dieser Kräfte im gesamten gebildeten Tragwerk erleichtern.

Weitere in den Figuren nicht gezeigte Ausführungsformen können jeweils mindestens einen Vorsprung auf der Oberseite und mindestens einen Vorsprung auf der Unterseite des Endabschnitts und/oder jeweils mindestens eine Vertiefung sowohl in der Oberseite als auch in der Unterseite des Endabschnitts eines ersten Tragelements vorsehen. Die zweite Alternative tritt immer auf, wenn mindestens eine der Vertiefungen als Durchgangsloch ausgebildet ist.

### Bezugszeichenliste

- 1: Verbindungsknotenanordnung (Verbindungsknoten)
- 100: erstes Tragelement
- 105: Längsachse
- 110: Ende
- 120: Endabschnitt
- 130: Klemmabschnitt
- 140, 140-1, 140-2: Vertiefungen
- 145: Unterseite
- 150, 150-1, 150-2: Vorwölbung
- 155: Oberseite
- 156, 156-1, 156-2: Vorsprung
- 160: Seitenkanten
- 170: Spitze
- 180: Aussparung
- 200: zweites Tragelement
- 210: Stirnseite
- 220: Innengewinde
- 230: Rohrwand
- 290: Einsenkungsbereich
- 300: Fixierelement
- 310: oberes Fixierelement
- 320: unteres Fixierelement
- 340: Vertiefung/Einwölbung
- 345: Unterseite
- 350: Vorwölbung
- 355: Oberseite
- 356: Vorsprung
- 370: Durchbrechung
- 375: Mittelpunkt
- 400: Verbindungselement
- 410: Rundkopf
- 420: Außengewinde
- 430: Schaft
- 500: Federelement
- 600: Zentrum
- 700: Ausgleichselement
- 740, 740-1, 740-2: Vertiefung
- 745: Unterseite
- 750: Vorwölbung
- 755: Oberseite
- 756, 756-1, 756-2: Vorsprung
- 760: Seitenkante
- 770: Spitze
- 780: Einkerbung

## Patentansprüche

1. Verbindungsknotenanordnung (1) für ein mindestens zweidimensionales Tragwerk, insbesondere Möbel-Verbindungsknotenanordnung, umfassend gleichartige erste Tragelemente (100), welche an mindestens einem Ende (110) einen abgeplatteten Endabschnitt (120) aufweisen,
ein oberes Fixierelement (310) und ein unteres Fixierelement (320),
ein Verbindungselement (400) zum Ausbilden einer Fixierkraft, welche das obere Fixierelement (310) und das untere Fixierelement (320) in einem fixierten Zustand aufgrund der durch das Verbindungselement (400) ausgeübten Fixierkraft gegeneinander presst,
wobei die abgeplatteten Endabschnitte (120) der gleichartigen ersten Tragelemente (100) in einer Ebene angeordnet sind und jeweils mit einem Klemmabschnitt (130) zwischen dem oberen Fixierelement (310) und dem unteren Fixierelement (320) angeordnet sind, wobei
entweder nach einer ersten Alternative jeder abgeplattete Endabschnitt (120) an einer Unterseite (145) mindestens eine Vertiefung (140; 140-1, 140-2) in dem Klemmabschnitt (130) oder jeder abgeplattete Endabschnitt (120) an einer Oberseite (155) mindestens eine Vertiefung (140; 140-1, 140-2) in dem Klemmabschnitt (130) aufweist und das obere Fixierelement (310) oder das untere Fixierelement (320) für jeden Endabschnitt (120), der zwischen den Fixierelementen (310, 320) gepresst wird, einen Vorsprung aufweist, der in die entsprechende mindestens eine Vertiefung (140; 140-1, 140-2) im fixierten Zustand eingreift,
oder nach einer weiteren Alternative jeder abgeplattete Endabschnitt an einer Unterseite einen Vorsprung (156; 156-1, 156-2) in dem Klemmabschnitt (130) oder jeder abgeplattete Endabschnitt an einer Oberseite mindestens einen Vorsprung (156; 156-1, 156-2) in dem Klemmabschnitt (130) aufweist und das obere Fixierelement (310) oder das untere Fixierelement (320) für jeden Endabschnitt (120), der zwischen den Fixierelementen (310, 320) gepresst wird, eine Vertiefung (340) aufweist, in die der entsprechende mindestens eine Vorsprung (156; 156-1, 156-2) im fixierten Zustand eingreift,
oder beide Alternativen zugleich ausgebildet sind,
**dadurch gekennzeichnet, dass**
das Verbindungselement in dem fixierten Zustand, in dem die zur Fixierung notwendige Fixierkraft ausgeübt wird, und in einem teilfixierten Zustand anordenbar ist, in dem zwar das obere Fixierelement und das untere Fixierelement miteinander verbunden sind, jedoch nicht die zur Fixierung notwendige Fixierkraft auf diese Fixierelemente seitens des Verbindungselements ausgeübt wird, und wobei ein oder zwei Federelemente (500) vorgesehen sind, die in dem teilfixierten Zustand die Fixierelemente gegeneinander pressen.

2. Verbindungsknotenanordnung (1) nach Anspruch 1, **dadurch gekennzeichnet, dass** zumindest das obere Fixierelement (310) eine Scheibe mit einer zentralen Durchgangsöffnung (370) ist, und bezüglich eines Punktes in der Durchgangsöffnung (370) punktsymmetrisch angeordnete Vertiefungen oder/und Vorsprünge aufweist.

3. Verbindungsknotenanordnung (1) nach einem der Ansprüche 1 oder 2, **dadurch gekennzeichnet, dass** die Vertiefungen (140; 140-1, 140-2) in den Unterseiten (145) oder die Vorsprünge (156; 156-1, 156-2) in den Oberseiten (155) der Endabschnitte über Materialverformungen derart ausgebildet sind, dass an der Unterseite (145) eine Einwölbung und an der Oberseite (155) eine Vorwölbung (150, 150-1, 150-2) auftritt, oder/und die Vertiefungen an der Oberseite oder die Vorsprünge an der Unterseite der Endabschnitte entsprechend über Materialverformungen derart ausgebildet sind, dass an der Oberseite eine Einwölbung und an der Unterseite entsprechend eine Vorwölbung auftritt.

4. Verbindungsknotenanordnung (1) nach einem der Ansprüche 1 oder 2, **dadurch gekennzeichnet, dass** die mindestens eine Vertiefung (140; 140-1, 140-2) in dem Endabschnitt der ersten Tragelemente (100) über ein Durchgangsloch ausgebildet ist.

5. Verbindungsknotenanordnung (1) nach einem der Ansprüche 1 bis 4, **dadurch gekennzeichnet, dass** ein oberes Federelement (500) zwischen dem oberen Fixierelement und einem Widerlager des Verbindungselements (400) angeordnet ist, und wobei das Verbindungselement in einen teilfixierten Zustand versetzbar ist, in dem das Verbindungselement zumindest das obere Fixierelement (500) und das untere Fixierelement (320) miteinander verbindet, aber nicht die zur Fixierung der Endabschnitte (120) zwischen den Fixierelementen (310, 320) notwendige Fixierkraft ausübt, wobei das Federelement (500) in dem teilfixierten Zustand die Fixierelemente (310, 320) gegeneinander presst.

6. Verbindungsknotenanordnung (1) nach einem der Ansprüche 1 bis 5, **dadurch gekennzeichnet, dass** n gleichartige erste Tragelemente in der Verbindungsknotenanordnung (1) miteinander zu dem Tragwerk verbindbar sind, wobei n eine natürliche Zahl größer gleich 2 ist, und die Endabschnitte zu einer Längsachse (105) des ersten Tragelements (100) zulaufende Seitenkanten (160) aufweist, die miteinander einen Winkel von 360°/n einschließen, und die Seitenkanten der Endabschnitte im verbundenen Zustand an eine Seitenkante (160) eines Endabschnitts (120) eines benachbarten gleichartigen ersten Tragelements (100) anliegen.

7. Verbindungsknotenanordnung (1) nach einem der Ansprüche 2 bis 6, **dadurch gekennzeichnet, dass** das Verbindungselement (400) durch die Durchgangsöffnung (370) des oberen Fixierelements (310) hindurch an einem zweiten Tragelement (200) lösbar befestigt ist, um in dem fixierten Zustand das obere Fixierelement (310) gegen das untere Fixierelement (320) zu pressen.

8. Verbindungsknotenanordnung (1) nach einem der Ansprüche 2 bis 7, **dadurch gekennzeichnet, dass** das untere Fixierelement (320) gleichartig wie das obere Fixierelement (310) als Scheibe mit einer zentralen Durchgangsöffnung (370) ausgebildet ist und die Vorsprünge (356) oder Vertiefungen (340) über Materialverformungen der Scheibe ausgebildet sind, die eine Einwölbung auf der einen Fläche der Scheibe und eine Vorwölbung (350) als Vorsprung (356) auf der diametral gegenüberliegenden Fläche der Scheibe ausbilden.

9. Verbindungsknotenanordnung (1) nach einem der Ansprüche 1 bis 7, **dadurch gekennzeichnet, dass** ein zweites langgestrecktes Tragelement (200) das untere Fixierelement (320) ist und eine quer zur Längserstreckungsrichtung orientierte Stirnseite (210) des zweiten langgestreckten Tragelements (200) als Klemmfläche ausgebildet ist, gegen welche die Klemmabschnitte (130) der Endabschnitte (120) der ersten Tragelemente (100) in dem fixierten Zustand gepresst werden.

10. Verbindungsknotenanordnung (1) nach Anspruch 8, **dadurch gekennzeichnet, dass** das Verbindungselement (400) durch eine Durchgangsöffnung (370) des oberen Fixierelements (310) und eine Durchgangsöffnung (370) des unteren Fixierelements (320) mit einem Gegenelement lösbar verbunden ist, und in dem fixierten Zustand zwischen dem Verbindungselement (400) und dem Gegenelement die Fixierkraft wirkt, die die Fixierelemente (310, 320) gegeneinander presst, und ein unteres Federelement (500) zwischen dem Gegenelement und dem unteren Fixierelement (320) angeordnet ist, dass in einem teilfixierten Zustand des Verbindungselements (400), in dem das Verbindungselement (400) zumindest das obere Fixierelement (310) und das untere Fixierelement (320) miteinander verbindet, aber nicht die zur Fixierung der Endabschnitte (120) zwischen den Fixierelementen (310, 320) notwendige Fixierkraft ausübt, das untere Fixierelement (320) gegen das obere Fixierelement (310) presst.

11. Tragwerk aus gleichartigen langgestreckten ersten Tragelementen (100) mit an gegenüberliegenden Enden (110) abgeplatteten Endabschnitten (120), die in Verbindungsknotenanordnungen (1) nach einem der Ansprüche 1 bis 10 miteinander verbunden sind.

12. Tragwerk nach Anspruch 11, **dadurch gekennzeichnet, dass** die in den Verbindungsknotenanordnungen (1) miteinander verbundenen ersten Tragelemente (100) zweidimensionale Tragwerksstrukturen ausbilden, die über zweite langgestreckte Tragelemente (200), die gleichartig ausgebildet sind, miteinander verbunden sind, mit deren Stirnseiten (210) die Verbindungselemente (400) der Verbindungsknotenanordnungen (1) verbunden sind.

13. Tragwerk nach einem der vorangehenden Ansprüche 11 oder 12, **dadurch gekennzeichnet, dass** Ausgleichselemente (700), welche eine Gestalt der abgeplatteten Endabschnitte (120) oder Klemmabschnitte (130) der ersten Tragelemente (100) aufweisen, anstelle von fehlenden Endabschnitten (120) von ersten Tragelementen (100) in Verbindungsknotenanordnungen (1) eingefügt sind, an denen eine geringere Anzahl als die mögliche Anzahl von gleichartigen miteinander verbindbaren ersten Tragelementen (100) miteinander verbunden ist.

14. Bausatz für ein mindestens zweidimensionales Tragwerk, insbesondere MöbelTragwerk, umfassend
Fixierelemente (300);
gleichartige erste Tragelemente (100), welche an gegenüberliegenden Enden (110) einen abgeplatteten Endabschnitt (120) aufweisen, wobei die abgeplatteten Endabschnitte (120) der gleichartigen Tragelemente (100) so ausgebildet sind, dass jeweils mehrere Endabschnitte (120) verschiedener der gleichartigen ersten Tragelemente (100) in einer Ebene jeweils mit einem Klemmabschnitt (130) zwischen zwei der Fixierelemente (300), d.h. zwischen einem oberen Fixierelement (310) und einem unteren Fixierelement (320), in einer Verbindungskontenanordnung (1) anordenbar sind,
und Verbindungselemente (400) zum Ausbilden einer Fixierkraft, welche die Fixierelemente (300) in einem fixierten Zustand in einer Verbindungsknotenanordnung (1) aufgrund der durch das Verbindungselement (400) ausgeübten Fixierkraft gegeneinander pressen, wobei entweder nach einer ersten Alternative jeder abgeplattete Endabschnitt (120) an
einer Unterseite (145) mindestens eine Vertiefung (140; 140-1, 140-2) in dem Klemmabschnitt (130) oder jeder abgeplattete Endabschnitt (120) an einer Oberseite (155) mindestens eine Vertiefung (140; 140-1, 140-2) in dem Klemmabschnitt (130) aufweist und das obere Fixierelement (310) oder das untere Fixierelement (320) für jeden Endabschnitt (120), der zwischen den Fixierelementen (310, 320) gepresst wird, einen Vorsprung aufweist, der in die entsprechende mindestens eine Vertiefung (140; 140-1, 140-2) im fixierten Zustand eingreift,
oder nach einer weiteren Alternative jeder abgeplattete Endabschnitt an einer Unterseite mindestens einen Vorsprung (156; 156-1, 156-2) in dem Klemmabschnitt (130) oder jeder abgeplattete Endabschnitt an einer Oberseite mindestens einen Vorsprung (156; 156-1, 156-2) in dem Klemmabschnitt (130) aufweist und das obere Fixierelement (310) oder das untere Fixierelement (320) für jeden Endabschnitt (120), der zwischen den Fixierelementen (310, 320) gepresst wird, eine Vertiefung (340) aufweist, in die der entsprechende mindestens eine Vorsprung (156; 156-1, 156-2) im fixierten Zustand eingreift,
oder beide Alternativen zugleich ausgebildet sind,
**dadurch gekennzeichnet, dass**
der Bausatz Federelemente (500) aufweist, welche derart in einer Verbindungsknotenanordnung anordenbar sind, dass ein oder zwei der Federelemente (500) in einem teilfixierten Zustand des Verbindungselements einer Verbindungsknotenanordnung, in dem das Verbindungselement zwar die Fixierelemente der Verbindungsknotenanordnung miteinander verbindet, aber nicht die zur Fixierung der Endabschnitte zwischen den Fixierelementen im fixierten Zustand notwendige Fixierkraft ausübt, die Fixierelemente gegeneinander pressen.

15. Bausatz nach Anspruch 14, **dadurch gekennzeichnet, dass** zweite gleichartige Tragelemente vorgesehen sind, an deren Stirnseiten (210) die Verbindungselemente (400) befestigbar sind, sodass über die ersten gleichartigen Tragelemente (100) ebene Tragstrukturen ausbildbar sind, die senkrecht hierzu durch die zweiten Tragelemente (200) miteinander verbindbar sind.

## Claims

1. A connecting-junction arrangement (1) for an at least two-dimensional load-bearing framework, in particular a furniture connecting-junction arrangement, comprising
identical first load-bearing elements (100), which have a flattened end portion (120) at least at one end (110),
an upper fixing element (310) and a lower fixing element (320),
a connecting element (400) for providing a fixing force which presses the upper fixing element (310) and the lower fixing element (320) against one another, in a fixed state, on account of the fixing force exerted by the connecting element (400),
wherein the flattened end portions (120) of the identical first load-bearing elements (100) are arranged in a single plane and are arranged in each case with a clamping portion (130) between the upper fixing element (310) and the lower fixing element (320),
wherein either, according to a first alternative, each flattened end portion (120), on an underside (145), has at least one depression (140; 140-1, 140-2) in the clamping portion (130), or each flattened end portion (120), on an upper side (155), has at least one depression (140; 140-1, 140-2) in the clamping portion (130), and the upper fixing element (310) or the lower fixing element (320), for each end portion (120) pressed between the fixing elements (310, 320), has a protrusion, which engages in the corresponding at least one depression (140; 140-1, 140-2) in the fixed state,
or, according to a further alternative, each flattened end portion, on an underside, has a protrusion (156; 156-1, 156-2) in the clamping portion (130), or each flattened end portion, on an upper side, has a protrusion (156; 156-1, 156-2) in the clamping portion (130), and the upper fixing element (310) or the lower fixing element (320), for each end portion (120) pressed between the fixing elements (310, 320), has a depression (340), in which the corresponding at least one protrusion (156; 156-1, 156-2) engages in the fixed state,
or both alternatives are provided at the same time,
**characterised in that** the connecting element can be arranged in the fixed state, in which the fixing force necessary for the fixing is exerted, and in a partially fixed state, in which the upper fixing element and the lower fixing element are indeed connected to one another, but the fixing force necessary for the fixing is not exerted onto these fixing elements by the connecting element, and wherein one or two spring elements (500) are provided, which in the partially fixed state presses/press the fixing elements against one another.

2. The connecting-junction arrangement (1) according to claim 1, **characterised in that** at least the upper fixing element (310) is a plate with a central through-opening (370), and has depressions and/or protrusions arranged point-symmetrically with respect to a point in the through-opening (370).

3. The connecting-junction arrangement (1) according to either one of claims 1 or 2, **characterised in that** the depressions (140; 140-1, 140-2) in the undersides (145) or the protrusions (156; 156-1, 156-2) in the upper sides (155) of the end portions are formed by material deformations in such a way that a concavity occurs on the underside (145) and a convexity (150, 150-1, 150-2) occurs on the upper side (155), and/or the depressions are formed on the upper side or the protrusions are formed on the underside of the end portions accordingly by means of material deformations in such a way that a concavity occurs on the upper side and a convexity occurs accordingly on the underside.

4. The connecting-junction arrangement (1) according to either one of claims 1 or 2, **characterised in that** the at least one depression (140; 140-1, 140-2) is formed in the end portion of the first load-bearing elements (100) by means of a through-hole.

5. The connecting-junction arrangement (1) according to any one of claims 1 to 4, **characterised in that** an upper spring element (500) is arranged between the upper fixing element and an abutment of the connecting element (400), and wherein the connecting element can be moved into a partially fixed state, in which the connecting element at least connects the upper fixing element (500) and the lower fixing element (320) to one another, but does not exert the fixing force necessary for the fixing of the end portions (120) between the fixing elements (310, 320), wherein the spring element (500) presses the fixing elements (310, 320) against one another in the partially fixed state.

6. The connecting-junction arrangement (1) according to any one of claims 1 to 5, **characterised in that** n identical first load-bearing elements can be connected to one another in the connecting-junction arrangement (1) so as to form the load-bearing framework, wherein n is a natural number greater than or equal to 2, and the end portions have side edges (160), which taper towards a longitudinal axis (105) of the first load-bearing element (100) and which together with one another enclose an angle of 360°/n, and the side edges of the end portions, in the connected state, bear against a side edge (160) of an end portion (120) of an adjacent identical first load-bearing element (100).

7. The connecting-junction arrangement (1) according to any one of claims 2 to 6, **characterised in that** the connecting element (400) is detachably fastened to a second load-bearing element (200) through the through-opening (370) in the upper fixing element (310) so as to press the upper fixing element (310) against the lower fixing element (320) in the fixed state.

8. The connecting-junction arrangement (1) according to any one of claims 2 to 7, **characterised in that** the lower fixing element (320) is formed identically to the upper fixing element (310) as a plate with a central through-opening (370), and the protrusions (356) or depressions (340) are formed by material deformations of the plate, which form a concavity on one face of the plate and a convexity (350) as a protrusion (356) on the diametrically opposed face of the plate.

9. The connecting-junction arrangement (1) according to any one of claims 1 to 7, **characterised in that** a second elongate load-bearing element (200) is the lower fixing element (320) and an end face (210), oriented transversely to the direction of longitudinal extent, of the second elongate load-bearing element (200) is formed as a clamping face, against which the clamping portions (130) of the end portions (120) of the first load-bearing elements (100) are pressed in the fixed state.

10. The connecting-junction arrangement (1) according to claim 8, **characterised in that** the connecting element (400) is detachably connected to a counter element through a through-opening (370) in the upper fixing element (310) and a through-opening (370) in the lower fixing element (320), and in the fixed state the fixing force acts between the connecting element (400) and the counter element, which fixing force presses the fixing elements (310, 320) against one another, and a lower spring element (500) is arranged between the counter element and the lower fixing element (320), which spring element, in a partially fixed state of the connecting element (400), in which the connecting element (400) connects at least the upper fixing element (310) and the lower fixing element (320) to one another, but does not exert the fixing force necessary for the fixing of the end portions (120) between the fixing elements (310, 320), presses the lower fixing element (320) against the upper fixing element (310).

11. A load-bearing framework formed of identical elongate first load-bearing elements (100) with flattened end portions (120) at opposite ends (110), which end portions are connected to one another in connecting-junction arrangements (1) according to any one of claims 1 to 10.

12. The load-bearing framework according to claim 11, **characterised in that** the first load-bearing elements (100) connected to one another in the connecting-junction arrangements (1) form two-dimensional load-bearing framework structures which are connected to one another by means of second elongate load-bearing elements (200), which are formed identically and of which the end faces (210) connect the connecting elements (400) of the connecting-junction arrangements (1).

13. The load-bearing framework according to either one of preceding claims 11 or 12, **characterised in that** compensation elements (700), which have a design of the flattened end portions (120) or clamping portions (130) of the first load-bearing elements (100), are inserted, instead of missing end portions (120) of first load-bearing elements (100), into connecting-junction arrangements (1) at which a smaller number than the possible number of identical first load-bearing elements (100) that can be connected to one another are connected to one another.

14. A kit for an at least two-dimensional load-bearing framework, in particular a furniture load-bearing framework, comprising
fixing elements (300);
identical first load-bearing elements (100), which have a flattened end portion (120) at opposite ends (110), wherein the flattened end portions (120) of the identical load-bearing elements (100) are configured so that a number of end portions (120) of various identical first load-bearing elements (100) can be arranged in a connecting-junction arrangement (1) in a single plane in each case with a clamping portion (130) between two of the fixing elements (300), i.e. between an upper fixing element (310) and a lower fixing element (320),
and connecting elements (400) for providing a fixing force, which press the fixing elements (300), in a fixed state in a connecting-junction arrangement (1), against one another on account of the fixing force exerted by the connecting element (400),
wherein either, according to a first alternative, each flattened end portion (120), on an underside (145), has at least one depression (140; 140-1, 140-2) in the clamping portion (130), or each flattened end portion (120), on an upper side (155), has at least one depression (140; 140-1, 140-2) in the clamping portion (130), and the upper fixing element (310) or the lower fixing element (320), for each end portion (120) pressed between the fixing elements (310, 320), has a protrusion, which engages in the corresponding at least one depression (140; 140-1, 140-2) in the fixed state,
or, according to a further alternative, each flattened end portion, on an underside, has at least one protrusion (156; 156-1, 156-2) in the clamping portion (130), or each flattened end portion, on an upper side, has at least one protrusion (156; 156-1, 156-2) in the clamping portion (130), and the upper fixing element (310) or the lower fixing element (320), for each end portion (120) pressed between the fixing elements (310, 320), has a depression (340), in which the corresponding at least one protrusion (156; 156-1, 156-2) engages in the fixed state,
or both alternatives are provided at the same time,
**characterised in that** the kit has spring elements (500), which can be arranged in a connecting-junction arrangement in such a way that one or two of the spring elements (500), in a partially fixed state of the connecting element of a connecting-junction arrangement, in which the connecting element indeed connects the fixing elements of the connecting-junction arrangement to one another, but does not exert the fixing force necessary for the fixing of the end portions between the fixing elements in the fixed state, presses/press the fixing elements against one another.

15. The kit according to claim 14, **characterised in that** second identical load-bearing elements are provided, and the connecting elements (400) can be secured to the end faces (210) of said load-bearing elements, so that level load-bearing structures can be formed by means of the first identical load-bearing elements (100), which-load-bearing structures can be connected to one another perpendicularly hereto by the second load-bearing elements (200).

## Revendications

1. Ensemble de noeuds d'assemblage (1) pour une ossature de support au moins bidimensionnelle, en particulier ensemble de noeuds d'assemblage de meuble, comprenant des premiers éléments de support (100) similaires, qui présentent, au niveau d'au moins une extrémité (110), une section d'extrémité (120) aplatie,
un élément de fixation supérieur (310) et un élément de fixation inférieur (320),
un élément d'assemblage (400) servant à réaliser une force de fixation, qui presse l'un contre l'autre l'élément de fixation supérieur (310) et l'élément de fixation inférieur (320) dans un état fixé du fait de la force de fixation exercée par l'élément d'assemblage (400),
dans lequel les sections d'extrémité (120) aplaties des premiers éléments de support (100) similaires sont disposées dans un plan et sont disposées respectivement avec une section de serrage (130) entre l'élément de fixation supérieur (310) et l'élément de fixation inférieur (320),
dans lequel
soit, selon une première variante, chaque section d'extrémité (120) aplatie présente, au niveau d'un côté inférieur (145), au moins un évidement (140 ; 140-1, 140-2) dans la section de serrage (130) soit chaque section d'extrémité (120) aplatie présente, au niveau d'un côté supérieur (155), au moins un évidement (140 ; 140-1, 140-2) dans la section de serrage (130) et l'élément de fixation supérieur (310) ou l'élément de fixation inférieur (320) présente, pour chaque section d'extrémité (120) qui est pressée entre les éléments de fixation (310, 320), une partie faisant saillie, qui vient en prise, dans l'état fixé, avec l'au moins un évidement (140 ; 140-1, 140-2) correspondant,
soit selon une autre variante, chaque section d'extrémité aplatie présente, au niveau d'un côté inférieur, une partie faisant saillie (156 ; 156-1, 156-2) dans la section de serrage (130) ou chaque section d'extrémité aplatie présente, au niveau d'un côté supérieur, au moins une partie faisant saillie (156 ; 156-1, 156-2) dans la section de serrage (130), et l'élément de fixation supérieur (310) ou l'élément de fixation inférieur (320) pour chaque section d'extrémité (120), qui est pressée entre les éléments de fixation (310, 320), présente un évidement (340), avec lequel l'au moins une partie faisant saillie (156 ; 156-1, 156-2) correspondante vient en prise dans l'état fixé,
soit les deux variantes sont réalisées dans le même temps, **caractérisé en ce que** l'élément d'assemblage peut être disposé dans l'état fixé, dans lequel la force de fixation nécessaire à la fixation est exercée, et dans un état partiellement fixé, dans lequel l'élément de fixation supérieur et l'élément de fixation inférieur sont certes assemblés l'un à l'autre, toutefois la force de fixation nécessaire aux fins de la fixation est exercée sur lesdits éléments de fixation du côté de l'élément d'assemblage, et dans lequel un ou deux éléments de ressort (500) sont prévus, lesquels pressent les uns contre les autres les éléments de fixation dans l'état partiellement fixé.

2. Ensemble de noeuds d'assemblage (1) selon la revendication 1, **caractérisé en ce qu'**au moins l'élément de fixation supérieur (310) est un disque pourvu d'une ouverture de passage (370) centrale, et présente des évidements et/ou des parties faisant saillie disposés selon une symétrie ponctuelle par rapport à un point dans l'ouverture de passage (370).

3. Ensemble de noeuds d'assemblage (1) selon l'une quelconque des revendications 1 ou 2, **caractérisé en ce que** les évidements (140 ; 140-1, 140-2) dans les côtés inférieurs (145) ou les parties faisant saillie (156 ; 156-1, 156-2) dans les côtés supérieurs (155) des sections d'extrémité sont réalisés par l'intermédiaire de déformations de matériau de manière à faire apparaître au niveau du côté inférieur (145) un bombement concave et au niveau du côté supérieur (155) un bombement convexe (150, 150-1, 150-2), et/ou les évidements au niveau du côté supérieur ou les parties faisant saillie au niveau du côté inférieur des sections d'extrémité sont réalisés de manière correspondante au-dessus de déformations de matériau de manière à faire apparaître au niveau du côté supérieur un bombement concave et au niveau du côté inférieur de manière correspondante un bombement convexe.

4. Ensemble de noeuds d'assemblage (1) selon l'une quelconque des revendications 1 ou 2, **caractérisé en ce que** l'au moins un évidement (140 ; 140-1, 140-2) dans la section d'extrémité des premiers éléments de support (100) est réalisé par l'intermédiaire d'un trou de passage.

5. Ensemble de noeuds d'assemblage (1) selon l'une quelconque des revendications 1 à 4, **caractérisé en ce qu'**un élément de ressort (500) supérieur est disposé entre l'élément de fixation supérieur et une butée de l'élément d'assemblage (400), et dans lequel l'élément d'assemblage peut être amené dans un état partiellement fixé, dans lequel l'élément d'assemblage assemble entre eux au moins l'élément de fixation supérieur (500) et l'élément de fixation inférieur (320), sans toutefois exercer la force de fixation nécessaire à la fixation des sections d'extrémité (120) entre les éléments de fixation (310, 320), dans lequel l'élément de ressort (500) presse les uns contre les autres les éléments de fixation (310, 320) dans l'état partiellement fixé.

6. Ensemble de noeuds d'assemblage (1) selon l'une quelconque des revendications 1 à 5, **caractérisé en ce que** n premiers éléments de support similaires dans l'ensemble de noeuds d'assemblage (1) peuvent être assemblés les uns aux autres pour former l'ossature de support, dans lequel n est un nombre naturel supérieur ou égal à 2, et les sections d'extrémité présentent des arêtes latérales (160) convergeant en direction d'un axe longitudinal (105) du premier élément de support (100), lesquelles forment les unes avec les autres un angle de 360°/n, et les arêtes latérales des sections d'extrémité reposent, dans l'état assemblé, au niveau d'une arête latérale (160) d'une section d'extrémité (120) d'un premier élément de support (100) similaire adjacent.

7. Ensemble de noeuds d'assemblage (1) selon l'une quelconque des revendications 2 à 6, **caractérisé en ce que** l'élément d'assemblage (400) est fixé de manière amovible au travers de l'ouverture de passage (370) de l'élément de fixation supérieur (310), au niveau d'un deuxième élément de support (200) afin de presser, dans l'état fixé, l'élément de fixation supérieur (310) contre l'élément de fixation inférieur (320).

8. Ensemble de noeuds d'assemblage (1) selon l'une quelconque des revendications 2 à 7, **caractérisé en ce que** l'élément de fixation inférieur (320) tout comme, de manière similaire, l'élément de fixation supérieur (310) sont réalisés sous la forme d'un disque pourvu d'une ouverture de passage (370) centrale, et les parties faisant saillie (356) ou les évidements (340) sont réalisés par l'intermédiaire de déformations de matériau du disque, qui réalisent un bombement concave sur une surface du disque et un bombement convexe (350) en tant que partie faisant saillie (356) sur la surface diamétralement opposée du disque.

9. Ensemble de noeuds d'assemblage (1) selon l'une quelconque des revendications 1 à 7, **caractérisé en ce qu'**un deuxième élément de support (200) étiré en longueur est l'élément de fixation inférieur (320) et un côté frontal (210), orienté de manière transversale par rapport au sens d'extension longitudinale, du deuxième élément de support (200) étiré en longueur est réalisé sous la forme d'une surface de serrage, contre laquelle les sections de serrage (130) des sections d'extrémité (120) des premiers éléments de support (100) sont pressées dans l'état fixé.

10. Ensemble de noeuds d'assemblage (1) selon la revendication 8, **caractérisé en ce que** l'élément d'assemblage (400) est assemblé de manière amovible à un contre-élément par une ouverture de passage (370) de l'élément de fixation supérieur (310) et par une ouverture de passage (370) de l'élément de fixation inférieur (320), et la force de fixation, qui presse les éléments de fixation (310, 320) les uns contre les autres, agit dans l'état fixé entre l'élément d'assemblage (400) et le contre-élément, et un élément de ressort (500) inférieur est disposé entre le contre-élément et l'élément de fixation inférieur (320), lequel élément de ressort presse, dans un état partiellement fixé de l'élément d'assemblage (400), dans lequel l'élément d'assemblage (400) assemble entre eux au moins l'élément de fixation supérieur (310) et l'élément de fixation inférieur (320) sans toutefois exercer la force de fixation nécessaire à la fixation des sections d'extrémité (120) entre les éléments de fixation (310, 320), l'élément de fixation inférieur (320) contre l'élément de fixation supérieur (310).

11. Ossature de support composée de premiers éléments de support (100) étirés en longueur similaires pourvus de sections d'extrémité (120) aplaties au niveau d'extrémités (110) opposées, lesquelles sections d'extrémité sont assemblées les uns aux autres dans des ensembles de noeuds d'assemblage (1) selon l'une quelconque des revendications 1 à 10.

12. Ossature de support selon la revendication 11, **caractérisée en ce que** les premiers éléments de support (100) assemblés les uns aux autres dans les ensembles de noeuds d'assemblage (1) réalisent des ossatures de support bidimensionnelles, qui sont assemblées les unes aux autres par l'intermédiaire de deuxièmes éléments de support (200) étirés en longueur, qui sont réalisés de manière similaire, auxquels côtés frontaux (210) desquels les éléments d'assemblage (400) des ensembles de noeuds d'assemblage (1) sont assemblés.

13. Ossature de support selon l'une quelconque des revendications précédentes 11 ou 12, **caractérisée en ce que** des éléments de compensation (700), qui présentent une forme des sections d'extrémité (120) aplaties ou des sections de serrage (130) des premiers éléments de support (100) sont insérés dans des ensembles de noeuds d'assemblage (1) à la place de sections d'extrémité (120) manquantes de premiers éléments de support (100), au niveau desquels un nombre inférieur au nombre possible de premiers éléments de support (100) similaires pouvant être assemblés les uns aux autres sont assemblés les uns aux autres.

14. Kit de construction pour une ossature de support au moins bidimensionnelle, en particulier ossature de support de meuble, comprenant
des éléments de fixation (300) ;
des premiers éléments de support (100) similaires, qui présentent, au niveau d'extrémités (110) opposées, une section d'extrémité (120) aplatie, dans lequel les sections d'extrémité (120) aplaties des éléments de support (100) similaires sont réalisées de telle sorte que respectivement plusieurs sections d'extrémité (120) de différents éléments de support des premiers éléments de support (100) similaires peuvent être disposées dans un ensemble de noeuds d'assemblage (1) dans un plan respectivement par une section de serrage (130) entre deux des éléments de fixation (300), en d'autres termes entre un élément de fixation supérieur (310) et un élément de fixation inférieur (320),
et des éléments d'assemblage (400) servant à réaliser une force de fixation, qui pressent les uns contre les autres les éléments de fixation (300) dans un état fixé dans un ensemble de noeuds d'assemblage (1) du fait de la force de fixation exercée par l'élément d'assemblage (400),
dans lequel
soit, selon une première variante, chaque section d'extrémité (120) aplatie présente, au niveau d'un côté inférieur (145), au moins un évidement (140 ; 140-1, 140-2) dans la section de serrage (130) soit chaque section d'extrémité (120) aplatie présente, au niveau d'un côté supérieur (155), au moins un évidement (140 ; 140-1, 140-2) dans la section de serrage (130) et l'élément de fixation supérieur (310) ou l'élément de fixation inférieur (320) présente, pour chaque section d'extrémité (120) qui est pressée entre les éléments de fixation (310, 320), une partie faisant saillie, qui vient en prise, dans l'état fixé, avec l'au moins un évidement (140 ; 140-1, 140-2) correspondant,
soit selon une autre variante, chaque section d'extrémité aplatie présente, au niveau d'un côté inférieur, au moins une partie faisant saillie (156 ; 156-1, 156-2) dans la section de serrage (130) ou chaque section d'extrémité aplatie présente, au niveau d'un côté supérieur, au moins une partie faisant saillie (156 ; 156-1, 156-2) dans la section de serrage (130), et l'élément de fixation supérieur (310) ou l'élément de fixation inférieur (320) pour chaque section d'extrémité (120), qui est pressée entre les éléments de fixation (310, 320), présente un évidement (340), avec lequel l'au moins une partie faisant saillie (156 ; 156-1, 156-2) correspondante vient en prise dans l'état fixé,
soit les deux variantes sont réalisées dans le même temps, **caractérisé en ce que** le kit de construction présente des éléments de ressort (500), qui peuvent être disposés de telle manière dans un ensemble de noeuds d'assemblage qu'un ou deux des éléments de ressort (500) pressent les uns contre les autres les éléments de fixation dans un état partiellement fixé de l'élément d'assemblage d'un ensemble de noeuds d'assemblage, dans lequel l'élément d'assemblage assemble certes les uns aux autres les éléments de fixation de l'ensemble de noeuds d'assemblage, sans toutefois exercer la force de fixation nécessaire à la fixation des sections d'extrémité entre les éléments de fixation dans l'état fixé.

15. Kit de construction selon la revendication 14, **caractérisé en ce que** des deuxièmes éléments de support similaires sont prévus, au niveau des côtés frontaux (210) desquels les éléments d'assemblage (400) peuvent être fixés de sorte que peuvent être réalisées par l'intermédiaire des premiers éléments de support (100) similaires des structures de support planes, qui peuvent être assemblées les unes aux autres de manière perpendiculaire par les deuxièmes éléments de support (200).
